(19) Europäisches Patentamt

European Patent Office

Office européen des brevets

(11) **EP 3 556 600 A1**

(12) **EUROPÄISCHE PATENTANMELDUNG**

(43) Veröffentlichungstag:
**23.10.2019 Patentblatt 2019/43**

(51) Int Cl.:
**B60L 53/124** (2019.01)

(21) Anmeldenummer: **19169790.3**

(22) Anmeldetag: **17.04.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **17.04.2018 DE 102018109093**

(71) Anmelder: **Zollner Elektronik AG**
**93499 Zandt (DE)**

(72) Erfinder: **Amberger, Daniel**
**94234 Viechtach (DE)**

(74) Vertreter: **Bittner, Bernhard**
**Hannke Bittner & Partner**
**Patent- und Rechtsanwälte mbB**
**Prüfeninger Strasse 1**
**93049 Regensburg (DE)**

(54) **VORRICHTUNG UND VERFAHREN ZUR KALIBRIERUNG VON OBJEKTERFASSUNGSEINRICHTUNGEN**

(57)     Verfahren zum Erfassen von Objekten bei Ladeanordnungen (1) zum Laden von elektrisch betriebenen Einrichtungen (100) mittels einer Erfassungseinrichtung (20), wobei wenigstens eine Einzelsensoreinrichtung (43) aufweisend einen elektrischen Schaltkreis, der wenigstens eine Erfassungsspule und/oder wenigstens einen Widerstand und/oder wenigstens einen Kondensator aufweist, mit einer Wechselspannung beaufschlagt wird und wenigstens eine für die Einzelsensoreinrichtung (43) charakteristische elektrische Größe $(a_n^M, b_n^M)$ gemessen wird, wobei wenigstens ein Kalibrierelement (72, 76) mit Wechselspannung beaufschlagt wird und wenigstens eine für dieses Kalibrierelement (72, 76) charakteristische elektrische Größe ( $a_{Ref}^M, b_{Ref}^M$; $a_{G,Sn,Kal}^M, b_{G,Sn,Kal}^M$ ) gemessen wird, wobei in Abhängigkeit von dieser für die Einzelsensoreinrichtung (43) charakteristischen Größe $(a_n^M, b_n^M)$ festgestellt wird, ob in der Umgebung (60) der Einzelsensoreinrichtung (43) ein gegenüber dieser Einzelsensoreinrichtung (43) bewegliches Objekt befindlich ist, wobei bei dieser Feststellung wenigstens eine Kalibriergröße berücksichtigt wird, die von wenigstens der für das Kalibrierelement (72, 76) charakteristischen elektrischen Größe $(a_{Ref}^M, b_{Ref}^M; a_{G,Sn,Kal}^M, b_{G,Sn,Kal}^M)$ abhängigist.

Fig. 6

Printed by Jouve, 75001 PARIS (FR)

**Beschreibung**

Die vorliegende Erfindung bezieht sich auf eine Vorrichtung zum Erfassen (bzw. Erkennen) von Objekten (genauer zum Erfassen der Anwesenheit von Objekten) und insbesondere von Fremdkörpern. Die Vorrichtung wird unter Bezugnahme auf ein Ladesystem zum Laden von elektrischen Geräten beschrieben. Es wird jedoch darauf hingewiesen, dass diese Vorrichtung zum Erfassen von Objekten auch in anderen Bereichen Anwendung finden kann, beispielsweise bei der Erfassung von Personen oder Lebewesen, aber auch bei der Erfassung von Objekten wie beispielsweise Kraftfahrzeugen. Bei den Fremdkörpern, die auch als Fremdobjekte bezeichnet werden können, kann es sich sowohl um anorganische Körper beispielsweise Metalle handeln, als auch um organische Körper.

Seit jüngerer Zeit ist die sogenannte Elektromobilität mehr und mehr ein wichtiges Thema für viele Kraftfahrzeughersteller. Ein wesentliches Problem hierbei ist die Aufladung der Kraftfahrzeuge. Hierfür sind im Stand der Technik bereits zahlreiche Vorgehensweisen bekannt, beispielsweise über Steckanschlüsse und dergleichen. Im Stand der Technik weiterhin bekannt sind mittlerweile auch Ladesysteme, welche den Ladevorgang induktiv und insbesondere berührungslos durchführen. Zu diesem Zweck kann beispielsweise das Kraftfahrzeug über ein Ladegerät gefahren werden und dieses Ladegerät weist eine Primärspule auf, über welche eine Spule des kraftfahrzeugseitigen Ladesystems versorgt wird.

Erhebliches Sicherheitsproblem bei diesen Vorgehensweisen können Fremdkörper darstellen, die beispielsweise auf/zwischen der Ladestation liegen. Insbesondere können dabei Fremdobjekte mit einem metallischen Anteil zu einem Sicherheitsrisiko werden, da diese ebenfalls sich während des Ladevorgangs stark erhitzen können und es so zu Beschädigungen kommen kann. Daneben kann sich während des Ladevorgangs auch ein Sicherheitsrisiko für Personen ergeben, etwa spielende Kinder, die mit ihrer Hand zwischen die Ladeelemente greifen.

Leitende Objekte in einem sich zeitlich ändernden Magnetfeld können sich durch Induktion oder ggf. Ummagnetisierung erwärmen. Dies kann bis zu einem Glühen oder Entflammen der Objekte führen. Aus diesem Grund ist in einer induktiven Ladeeinheit ein System notwendig, das diese Situation verhindert, bevor es zu einer kritischen Erwärmung und den damit verbundenen Risiken kommt.

Das Akronym "FOD" (Foreign Object Detection) beschreibt ein System mit der Funktion einer Fremdkörpererkennung im Umfeld eines induktiven Ladesystems. Das Ziel ist das Detektieren von Fremdkörpern vor dem und im Ladebetrieb. Daraus folgt das Verhindern bzw. Minimieren von möglichen Gefahren für das System selbst, dessen Umfeld und den Anwender (Gefahr durch berühren heißer Objekte, Verhinderung Brandgefahr,...).

Die Grundlage des FOD-Systems bildet ein aktives elektromagnetisches Sensorsystem. Induktive Sensoren, die von einem zeitvarianten Strom durchflossen werden, erzeugen ein zeitvariantes magnetisches Wirbelfeld. Fremdobjekte, die in den Wirkungsbereich des magnetischen Feldes gebracht werden, erfahren eine Wechselwirkung mit dem selbigen. Die Eigenschaften des Sensors werden dadurch verändert. Es besteht ein deterministischer Zusammenhang zwischen der Änderung der elektrischen Sensoreigenschaften und den physikalischen Eigenschaften der Objekte (insbesondere elektrische und magnetische Leitfähigkeiten bzw. Verlustfaktoren), der Größe und Form der Fremdobjekte und der Entfernung vom und Lage zum Sensor.

Allerdings können einzelne Komponenten, die bei der Messung der elektrischen Sensoreigenschaften beteiligt sind, fehlerbehaftet sein. Insbesondere können auch, wie nachfolgend noch detaillierter aufgeführt, systematische Fehler etwa an der Hardware der Messelektronik auftreten, durch welche beispielsweise die Messwerte für die Anwendung einer Fremdkörpererkennung unzulässig hoch verfälscht werden. Aus den Vorrichtungen und Verfahren, die derzeit aus dem Stand der Technik bekannt sind, ergibt sich daher der Nachteil, dass durch auftretende systematische Fehler die Messwerte für die Anwendung einer Fremdkörpererkennung verfälscht werden können. Hierdurch könnte sich nicht zuletzt eine Sicherheitsgefahr ergeben oder auch zumindest etwaige Sicherheitstoleranzen reduziert werden.

Der vorliegenden Erfindung liegt daher die Aufgabe zugrunde, eine hohe Präzision der Fremdkörpererkennung auch bei auftretenden systematischen Fehlern bereitzustellen bzw. zu gewährleisten und hierdurch die Sicherheit derartiger induktiver Ladeeinrichtungen zu erhöhen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche. Eine weitere Aufgabe der Erfindung besteht darin, eine Erfassungseinrichtung zur Verfügung zu stellen, welche auch über größere Zeiträume hinweg ein präzises und sicheres Erfassen von Objekten, insbesondere ein Erfassen und/oder Feststellen der Anwesenheit von Objekten ermöglicht.

Eine erfindungsgemäße Ladeanordnung zum Laden von elektrisch betriebenen Einrichtungen weist wenigstens eine Primärspule auf, welche dazu geeignet und bestimmt ist, ein magnetisches Feld zu erzeugen, um elektrische Energie induktiv auf eine Sekundärspule, welche Bestandteil der elektrisch betriebenen Einrichtung ist, zu übertragen.

Bei der Ladeanordnung handelt es sich insbesondere um ein Primärmodul, welches dazu geeignet und bestimmt ist, ein Sekundärmodul (etwa ein, eine Sekundärspule aufweisendes, Modul) des zu ladenden Objekts (zum Beispiel eines Fahrzeugs), induktiv mit Energie zu versorgen.

Dabei weist die Ladeanordnung erfindungsgemäß eine Erfassungseinrichtung zum Erfassen von Objekten auf, wobei die Erfassungseinrichtung wenigstens einen Signalgenerator, welcher dazu geeignet und bestimmt ist, wenigstens eine Einzelsensoreinrichtung aufweisend einen elektrischen Schaltkreis, der wenigstens eine Erfassungsspule und/oder wenigstens einen Widerstand und/oder wenigstens einen Kondensator aufweist, mit Wechselspannung zu versorgen, und eine Auswerteeinrichtung (und/oder eine Messeinrichtung) auf, die dazu geeignet und bestimmt ist, wenigstens eine für die Einzelsensoreinrichtung (und/oder für den elektrischen Schaltkreis) charakteristische elektrische Größe zu erfassen. Dabei handelt es sich bei der für die Einzelsensoreinrichtung (bzw. für den elektrischen Schaltkreis) charakteristischen Größe bevorzugt um Phaseninformationen (und/oder Amplitudeninformationen) und diese charakteristische Größe ist bevorzugt auf Basis von Streuparametermessungen des elektrischen Schaltkreises (bzw. der Einzelsensoreinrichtung(en)) gewonnen. Dabei wird insbesondere unter der für die Einzelsensoreinrichtung charakteristischen Größe eine Größe verstanden, die (unter anderem auch) von wenigstens einem Kennwert, bevorzugt von einer Vielzahl von Kennwerten (etwa zwei Kennwerten), des Serienersatzbildes (bzw. der Serienersatzschaltung) der (bzw. wenigstens einer) Einzelsensoreinrichtung (welches beispielsweise aus einem Serienersatzwiderstand und einer Induktivität besteht oder diese aufweist) abhängt. Dabei kann es sich bei dem Kennwert beispielsweise um den Widerstandswert oder den Wert der Induktivität oder den Kapazitätswert des Serienersatzschaltung (bzw. Serienersatzbild) der Einzelsensoreinrichtung handeln. Bevorzugt wird dabei (wenigstens) ein Messsignal direkt abgetastet. Bevorzugt wird die charakteristische Größe durch vektorielle Streuparametermessungen des elektrischen Schaltkreises (bzw. der Einzelsensoreinrichtung(en)) bestimmt.

Bevorzugt handelt es sich bei der Wechselspannung um eine Sinusspannung und allgemein um eine periodische Wechselspannung. Bevorzugt handelt es sich bei der Wechselspannung um die Überlagerung wenigstens zweier oder bevorzugt mehrerer Sinusspannungen (und/oder Kosinusspannungen). Bei dem Signalgenerator kann es sich bevorzugt um einen Frequenzgenerator handeln. Bevorzugt ist der Signalgenerator dazu geeignet und bestimmt, mehrere Wechselspannungen wie etwa Sinusspannungen und/oder Kosinusspannungen zu überlagern. Dabei kann das Signal bzw. die Wechselspannung durch einen Digital-Analog-Converter erzeugt werden.

Erfindungsgemäß ist die Erfassungseinrichtung dazu geeignet und bestimmt, wenigstens eine Kalibriereinrichtung (bevorzugt wenigstens eine erste Kalibriereinrichtung und wenigstens eine zweite Kalibriereinrichtung), mit (jeweils) wenigstens einem Kalibrierelement, bevorzugt mit (jeweils) wenigstens drei (verschiedenen) Kalibrierelementen, insbesondere durch den Signalgenerator mit Wechselspannung zu versorgen, wobei die Auswerteeinrichtung dazu geeignet und bestimmt ist, wenigstens eine für das (und bevorzugt jedes) Kalibrierelement charakteristische elektrische Größe zu erfassen (bzw. zu messen bzw. zu bestimmen). Dabei ist die Ladeanordnung bevorzugt dazu geeignet und bestimmt, das weiter unten beschriebene Verfahren bzw. einzelne in diesem Kontext beschriebene Verfahrensschritte oder in Kombination auszuführen.

Besonders bevorzugt erfasst die Auswerteeinrichtung die charakteristische Größe des Schaltkreises (bzw. der Einzelsensoreinrichtung(en)) durch eine Beaufschlagung desselben mit der Wechselspannung und genauer durch das Erfassen einer Reaktion, des mit der Wechselspannung beaufschlagten Schaltkreises (bzw. der mit der Wechselspannung beaufschlagten Einzelsensoreinrichtung), auf die Anwesenheit eines Fremdkörpers. Die oben genannte Spule der Erfassungseinrichtung bzw. der Einzelsensoreinrichtung(en) wird bzw. werden zum Zwecke der besseren Abgrenzung gegenüber der Primärspule im Folgenden auch als Erfassungsspule bezeichnet. Allgemein weist die Erfassungseinrichtung wenigstens ein elektrisches Bauteil auf, dessen Eigenschaften und insbesondere dessen Stromleiteigenschaften sich bei Anwesenheit eines Fremdkörpers ändern. Bei diesem Bauteil kann es sich insbesondere um eine Spule (oder allgemein um eine Induktivität) und/oder einen Kondensator (oder allgemein um ein kapazitives Element) handeln. Zusätzlich kann ein Widerstand vorhanden sein.

Die Erfassungseinrichtung kann dabei bevorzugt ein Bestandteil der Ladeanordnung sein, bzw. mit dem Primärmodul in fester Verbindung stehen (bzw. einen Teil des Primärmoduls ausbilden). Es wäre jedoch auch denkbar, dass die Erfassungseinrichtung in das Sekundärmodul des zu ladenden Objekts integriert ist oder aber dass die Erfassungseinrichtung ein weiteres Modul ist, welches beispielsweise zwischen dem Primärmodul und dem Sekundärmodul angeordnet ist.

Bevorzugt ist die elektrische und aufzuladende Einrichtung aus einer Gruppe von Einrichtungen ausgewählt, welche Kraftfahrzeuge, insbesondere PKWs, Motorräder, Haushaltsgeräte, Telekommunikationsgeräte, wie Smartphones und dergleichen, enthält. Vorteilhaft weist die Ladeanordnung ein Netzteil auf, um die Primärspule mit elektrischer Energie zu versorgen.

In einer vorteilhaften Ausführungsform wird die Primärspule mit einer Primärspannung einer ersten Frequenz betrieben und die Wechselspannungsquelle gibt eine Wechselspannung einer zweiten Frequenz ab und eine dieser beiden Frequenzen ist wenigstens doppelt so groß wie die andere der beiden Frequenzen. Es wird daher hierbei vorgeschlagen, dass sich die Frequenzen, die zum Betrieb des elektrischen Schaltkreises bzw. Schwingkreises einerseits verwendet werden und die zum Betrieb der Primärspule andererseits verwendet werden, erheblich voneinander unterscheiden, wenigstens um den Faktor 2. Bevorzugt ist die Frequenz, die zum Betrieb des Schaltkreises bzw. Schwingkreises verwendet wird wesentlich höher als die Frequenz, mit der die Primärspule versorgt wird. Vorzugsweise ist die eine der genannten Frequenzen wenigstens fünfmal so groß wie die andere, bevorzugt wenigstens zehnmal so groß, besonders bevorzugt wenigstens einhundertmal so groß. Auf diese Weise kann erreicht werden, dass auch während eines Betriebs der Primärspule der elektrische Schwingkreis nicht wesentlich durch den Einfluss der Primärspule b deren magnetisches Feld beeinflusst wird.

Bei einer weiteren vorteilhaften Ausführungsform sind die Primärspule und die Erfassungsspule (oder allgemein die Erfassungseinrichtung bzw. Bestandteile der Erfassungseinrichtung) in einer vorgegebenen festen Position zueinander angeordnet. (wie erwähnt, kann der empfindliche Part kann auch ein Kondensator sein). Ein (zweites) Sensornetzwerk kann auch im Automodul angebracht sein. Auf diese Weise kann eine bessere Zwischenraumüberwachung erreicht werden. So können beispielsweise die Primärspule und die Erfassungseinrichtung (beispielsweise eine Erfassungsspule) an einem gemeinsamen Träger und/oder an einem gemeinsamen Gehäuse angeordnet sein. Besonders bevorzugt ist ein Schutzelement vorgesehen, welches die Primärspule sowie auch die Erfassungsspuleneinrichtung bzw. den elektrischen Schaltkreis und/oder den elektrischen Schwingkreis vor einer unmittelbaren Berührung schützt. Eine Dicke bzw. Widerstandsfähigkeit dieser Schutzschicht kann sich dabei nach den jeweiligen Anforderungen richten. Etwa dem Einsatzgebiet der Erfassungseinrichtung oder auch dem Einsatzgebiet der Ladeanordnung.

In einer weiteren vorteilhaften Ausführungsform weist die Ladeanordnung eine Steuerungseinrichtung auf, welche eine Bestromung der Primärspule in Abhängigkeit von einem Ausgangssignal der Erfassungseinrichtung steuert. Falls sich beispielsweise anhand dieses Ausgangssignals ergibt, dass sich ein Fremdkörper zwischen der Primärspule und der Sekundärspule bzw. im Bereich der Primärspule befindet, so kann eine (Einschalt-)Bestromung der Primärspule verhindert oder eine Stromzufuhr für die Primärspule abgeschalten werden, um auf diese Weise Sicherungsrisiken zu verhindern. Weiterhin kann die Vorrichtung eine Informationsausgabeeinrichtung aufweisen, welche den Benutzer in physisch wahrnehmbarer Weise über einen Fremdkörper informiert. Genauer gesagt ist es möglich dass der Sensor auch eine Voraberkennung vor dem Ladebetrieb leistet (da der Sensor eben auch unabhängig von dem Betrieb der Primärspule erfassen kann). Dies zeichnet ihn gegenüber anderen bekannten Sensorsystemen aus. Hier ist auch eine der großen Stärken der Erfindung zu sehen.

Gemäß zumindest einer Ausführungsform weist die Ladeanordnung zumindest einen A/D-Wandler auf, welcher ein Analogsignal abtastet.

Gemäß zumindest einer Ausführungsform werden die Phaseninformationen auf Basis der Streuparameter gewonnen, indem die Streuparameter mittels Algorithmen als komplexe Größen erfasst werden.

Gemäß zumindest einer Ausführungsform ist eine Signalaufbereitung vorgesehen, welche dem Mikrocontroller ein aufbereitetes Analogsignal zur Verfügung stellt.

Diese Ausgabeeinrichtung kann dabei beispielsweise ein akustisches Alarmsignal ausgeben, welches dem Benutzer anzeigt, dass sich ein Fremdkörper im Bereich der Primärspule befindet. Weiterhin ist es auch möglich, dass bei der Erfassung eines Fremdkörpers auch während des laufenden Betriebs insbesondere des laufenden Ladebetriebs abgeschaltet wird oder ein Einschalten verhindert wird. Weiterhin ist es möglich, dass die Primärspule und die Erfassungsspule gemeinsam betrieben werden. Es ist jedoch auch möglich, dass die Erfassungsspule außerhalb des Betriebs der Primärspule betrieben wird.

Weiterhin kann eine Steuerungseinrichtung vorgesehen sein, welche Messungen auf Fremdkörper in vorgegebenen Zeitabständen bzw. zu diskreten Zeitpunkten durchführt, beispielsweise in einer vorgegebenen Taktung.

Die vorliegende Erfindung ist weiterhin gerichtet auf eine Erfassungseinrichtung zum Erfassen von Objekten, wobei die Erfassungseinrichtung wenigstens einen Signalgenerator, welcher dazu geeignet und bestimmt ist, wenigstens eine Einzelsensoreinrichtung aufweisend einen elektrischen Schaltkreis (und insbesondere einen Schwingkreis), der wenigstens eine Erfassungsspule und/oder wenigstens einen Widerstand und/oder wenigstens einen Kondensator aufweist, mit Wechselspannung zu versorgen, und eine Auswerteeinrichtung aufweist, die dazu geeignet und bestimmt ist, wenigstens eine für die Einzelsensoreinrichtung charakteristische elektrische Größe zu erfassen. Bevorzugt weist die Erfassungseinrichtung wenigstens zwei Spulen bzw. wenigstens zwei Erfassungsspulen auf. Bevorzugt weist die Erfassungseinrichtung wenigstens einen Kondensator auf.

Die Erfassungseinrichtung kann beispielsweise eine Messeinrichtung aufweisen, welche ein von dem (bevorzugt jedem) Schwingkreis (bzw. von wenigstens einer Einzelsensoreinrichtung und bevorzugt von jeder Einzelsensoreinrichtung) stammendes elektrisches Signal misst. Ggfs. weist die Messeinrichtung und/oder die Sensoreinrichtung wenigstens einen Richtkoppler auf. Bevorzugt wird jedoch eine Messeinrichtung und/oder Sensoreinrichtung verwendet, welche ohne die Verwendung eines Richtkopplers arbeitet.

Erfindungsgemäß ist die Erfassungseinrichtung dazu geeignet und bestimmt, wenigstens eine Kalibriereinrichtung (und bevorzugt wenigstens eine erste Kalibriereinrichtung und/oder wenigstens eine zweite Kalibriereinrichtung) mit (jeweils) wenigstens einem Kalibrierelement (und bevorzugt mit jeweils wenigstens drei Kalibrierelementen) insbesondere durch den Signalgenerator mit Wechselspannung zu versorgen, wobei die Auswerteeinrichtung dazu geeignet und bestimmt ist, wenigstens eine für das (und bevorzugt jeweils eine für jedes) Kalibrierelement charakteristische elektrische Größe zu erfassen. Bevorzugt weist die Erfassungseinrichtung eine Messeinrichtung auf, die wenigstens eine für das (und bevorzugt jeweils eine für jedes) Kalibrierelement charakteristische elektrische Größe misst. Dabei ist bevorzugt die Erfassungseinrichtung dazu geeignet und bestimmt, obig im Zusammenhang mit dem Verfahren zum Erfassen von Objekten beschriebene Verfahrensschritte einzeln oder in Kombination auszuführen und umgekehrt. Ferner kann die Erfassungseinrichtung die obig im Zusammenhang mit der Ladeanordnung beschriebene Merkmal einzeln oder in Kombination aufweisen und umgekehrt.

Bei einer für ein Kalibrierelement charakteristischen elektrischen Größe handelt es sich bevorzugt um eine Amplitudeninformation und/oder eine Phaseninformation, welche insbesondere (jeweils) abhängig von der Frequenz des anregenden Signals bzw. der Wechselspannung sind, und diese charakteristische Größe ist bevorzugt auf Basis von (vektorieller) Streuparametermessungen an diesem Kalibrierelement gewonnen. Unter vektoriell wird dabei bevorzugt eine Messung nach Amplitude und Phase verstanden.

Eine Anwendung dieser Erfassungseinrichtung kann damit wiederum eine Ladeeinrichtung zum Laden von beispielsweise Fahrzeugen sein. Daneben kann jedoch mittels der Erfassungseinrichtung auch eine Erfassung von anderen Objekten möglich sein, wie oben erwähnt, beispielsweise von Lebewesen oder auch von Fahrzeugen oder dergleichen. Die Lebendobjekterkennung kann jedoch auch mit der "einfachen" Variante mit nur einem Netzwerk bzw. Schaltkreis funktionieren. Die Lebendobjekterkennung kann jedoch auch mit der "einfachen" Variante mit nur einem Netzwerk bzw. Schaltkreis funktionieren. An dieser Stelle wird darauf hingewiesen, dass im Rahmen dieser Offenbarung neben dem Begriff "Schaltkreis" auch der Begriff "Netzwerk" verwendet wird. Bei dem Schaltkreis handelt es sich bevorzugt nicht um einen sog. Integrierten Schaltkreis (IC). Damit kann es sich bei dem Objekt sowohl um ein organisches als auch um ein anorganisches Objekt handeln. Daneben können diese Objekte metallische Objekte sein, aber auch nichtmetallische Objekte. Es wird auch hier vorgeschlagen, dass bestimmt wird, wie sich durch das besagte Objekt ein Verhalten des Schaltkreises bzw. Schwingkreises und insbesondere dessen Eigenfrequenz ändert.

Bevorzugt weist der Schwingkreis eine Vielzahl von Erfassungsspulen auf (zu jedem Schwingkreis gehört bevorzugt meistens immer genau eine Spule oder eine Vielzahl von in Serie und/oder parallel geschalteten Spulen) bevorzugt wenigstens vier Spulen, bevorzugt wenigstens fünf Spulen und bevorzugt wenigstens sechs Spulen.

Bei einer weiteren vorteilhaften Ausführungsform weist die Erfassungseinrichtung eine geradzahlige Anzahl von Spulen und/oder Einzelsensoreinrichtungen (mit jeweils einer Spule) auf. Auf diese Weise können beispielsweise die Spulen bzw. Spulenbereiche jeweils paarweise in unterschiedlichen Richtungen gewickelt sein, sodass in der Gesamtheit die Spulen nicht durch ein magnetisches Feld, welches beispielsweise von der Primärspule stammt, beeinflusst werden. Allgemein ist es möglich, dass wenigstens zwei Spulen bzw. Spulenbereiche gegenläufig "gewickelt" sind bzw. in gegenläufiger Richtung verlaufende Windungen aufweisen. Auf diese Weise kann wie oben erwähnt, ein Effekt der Primärspule auf diese Spulen abgeschwächt werden. Die Anwesenheit eines Fremdkörpers wirkt sich jedoch in der Regel nur auf ein der genannten Spulen aus.

Weiterhin sind bevorzugt mehrere Spulen eines Schwingkreises seriell angeordnet. Es wäre jedoch auch möglich, dass im Rahmen eines Schwingkreises mehrere Spulen parallel angeordnet sind. Daneben können bevorzugt mehrere elektrische Schwingkreise vorgesehen sein, die beispielsweise jeweils wenigstens eine Spule und wenigstens einen Kondensator aufweisen. Dabei wäre es möglich, dass mittels einer Steuerung diese parallelen Schwingkreise beispielsweise nacheinander angesprochen bzw. bestromt werden. Auch wäre es möglich dass ein Kondensator schalttechnisch nacheinander mit mehreren Spulen verbunden wird, um so die einzelnen Schaltkreise bzw. Schwingkreise zu realisieren.

Bei einer weiteren vorteilhaften Ausführungsform wäre es möglich, dass sich eine erste Gruppe von Schwingkreisen und insbesondere die Spulen dieser Schwingkreise in einer ersten vorgegebenen Richtung erstreckt. Daneben wäre es möglich, dass sich eine erste Gruppe von Schwingkreisen in einer ersten Richtung erstreckt und eine zweite Gruppe von Schwingkreisen in einer zweiten insbesondere zu der ersten Richtung senkrechten Richtung erstreckt. Auf diese Weise wäre es möglich, dass auch eine relativ genaue Position der Objekte erfasst wird.

Insgesamt könnte so ein Array aus Schwingkreisen zur Verfügung gestellt werden. Durch entsprechende Abfrage der einzelnen Schwingkreise kann dann die Position des Objekts bestimmt werden, wobei beispielsweise davon ausgegangen werden kann, dass das Objekt sich auf einen Schwingkreis, der sich in der ersten Richtung erstreckt und auf einen zweiten Schwingkreis, der sich in einer zweiten zu der ersten Senkrechten Richtung erstreckt auswirkt.

Es wäre auch denkbar, dass eine noch genauere Position ermittelt wird. So könnte etwa ein Objekt, welches sich zwischen zwei Schwingkreisen befindet, sich auf eben diese beiden Schwingkreise auswirken. Auch aus dem Maß, wie sich das Objekt auf einen bestimmten Schwingkreis auswirkt, können Rückschlüsse gezogen werden. Auch wäre es möglich, ein Bewegungsprofil eines Objektes gegenüber der Messeinrichtung bzw. Erfassungseinrichtung zu bestimmen.

Bei einer weiteren vorteilhaften Ausführungsform ist die Frequenz des Signalgenerators in einem vorbestimmten Frequenzbereich bzw. Frequenzband durchstimmbar.

Bevorzugt ist wenigstens eine Frequenz und besonders bevorzugt sind alle Frequenzen ausgewählt aus einem Bereich um 1 MHz. Bevorzugt wird die Sensoreinrichtung und/oder die Einzelsensoreinrichtung(en) und/oder (erste und/oder zweite) Kalibriereinrichtung insbesondere sequentiell mit Wechselspannung unterschiedlicher Frequenzen beaufschlagt. Bevorzugt werden hierfür mindestens zehn, bevorzugt mindestens zwanzig, bevorzugt mindestens dreißig und besonders bevorzugt 32 und/oder bevorzugt höchstens 50 unterschiedliche Frequenzen gewählt. Bevorzugt sind diese ausgewählt aus einem Bereich zwischen 500 kHz und 1 MHz, bevorzugt aus einem Bereich zwischen 600 kHz und 900 kHz und besonders bevorzugt aus einem Bereich zwischen 700 kHz und 900 kHz.

Beispielsweise liegt eine Kapazität des bzw. wenigstens eines Kondensators des Schaltkreises zwischen 20 pF und 1nF, bevorzugt zwischen 50 pF und 500 pF und bevorzugt zwischen 100 pF und 300 pF. Insbesondere kann eine Kapazität des bzw. wenigstens eines Kondensators des Schaltkreises zwischen 1 nF und 50 nF, bevorzugt zwischen 3 nF und 30 pF und bevorzugt zwischen 4 nF und 20 nF, liegen. Vorteilhaft ist der wenigstens eine Kondensator aus einer Gruppe von Kondensatoren ausgewählt, welche Folienkondensatoren, Keramikkondensatoren und dergleichen enthält. Daneben könnten auch sogenannte Kapazitätsdioden Anwendung finden, deren Kapazität veränderbar ist.

Bei einer weiteren vorteilhaften Ausführungsform weist die Vorrichtung einen A/D-Wandler auf um analoge Signale in digitale Signale umzuwandeln.

Bevorzugt erzeugt der Signalgenerator eine hinsichtlich der Frequenz veränderbare Ausgangsspannung. Auf diese Weise kann eine Frequenz, mit der oder die elektrische Schwingkreise angesteuert werden, in einem bestimmten Bereich und insbesondere einem bestimmten Bereich um eine Resonanzfrequenz angesteuert werden.

Bei einer weiteren vorteilhaften Ausführungsform weist die Erfassungseinrichtung eine Steuerungseinrichtung auf, welche die Frequenz der Ausgangsspannung des Signalgenerators in einem vorgegebenen Frequenzbereich steuert. So kann beispielsweise eine Frequenz des Signalgenerators in einem bestimmten Frequenzbereich durchgestimmt werden. So könnte beispielsweise die Frequenz in einem Bereich von +/- 50 Kilohertz (+/-50 kHz) um eine Eigenfrequenz des Schwingkreises angesteuert werden.

Bevorzugt erlaubt die Auswerteeinrichtung und/oder die Messeinrichtung eine Erfassung nur einer Kenngröße oder nur weniger Kenngrößen des Schaltkreises bzw. Netzwerks. So könnte es sich bei dem Schaltkreis um einen Zweipol handeln. Es könnte sich allerdings auch um einen Vierpol handeln, wobei etwa nur zwei Werte dieses Vierpols gemessen werden, wie etwa dessen S11 und dessen S21 - Parameter.

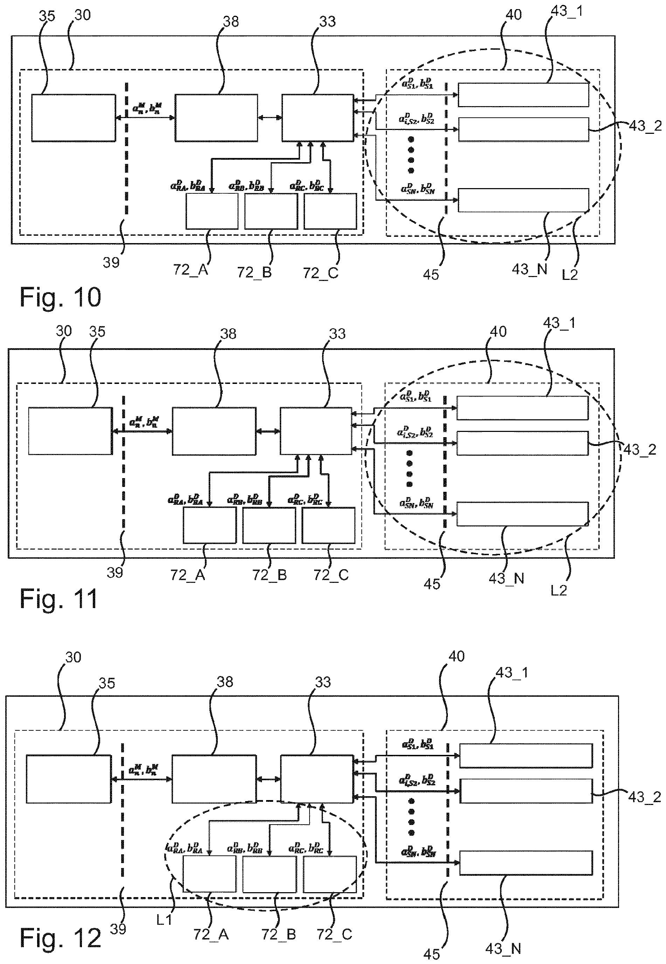

Ggfs. weist die Messeinrichtung und/oder die Auswerteeinrichtung und/oder die Einzelsensoreinrichtung(en) wenigstens einen Richtkoppler auf, um wenigstens einen Anteil einer Spannung aus dem Schaltkreis abzugreifen. Bevorzugt ist jedoch eine Ausgestaltung, welche auf den Einsatz von Richtkopplern verzichtet (vgl. Fig. 10). Ggfs. weist die Auswerteeinrichtung und/oder die Einzelsensoreinrichtung(en) wenigstens zwei derartige Richtkoppler auf. Bei einer weiteren vorteilhaften Ausführungsform handelt es sich bei wenigstens einem Richtkoppler um einen unidirektionalen Richtkoppler. Bei einer weiteren vorteilhaften Ausführungsform handelt es sich bei wenigstens einem dieser Richtkoppler um einen bidirektionalen Richtkoppler. Bei einer weiteren vorteilhaften Ausführungsform weist die Auswerteeinrichtung wenigstens eine Messeinrichtung zur Messung einer Stromstärke oder einer Spannung auf. Vorteilhaft ist diese Messeinrichtung parallel zum dem erwähnten Schaltkreis oder Schwingkreis.

Bei einer weiteren bevorzugten Vorrichtung ist die, für den Schwingkreis charakteristische, Größe aus einer Gruppe von elektrischen Größen ausgewählt, welche eine Dämpfung des Schaltkreises bzw. Schwingkreises, eine Verlustleistung des Schaltkreises bzw. Schwingkreises und dergleichen enthält.

Bevorzugt dient die Erfassungseinrichtung auch zum nicht-optischen Erfassen von Fremdkörpern und/oder Objekten.

Bei einer weiteren vorteilhaften Ausführungsform ist die wenigstens eine und sind bevorzugt die wenigstens zwei Erfassungsspulen auf einer Platine angeordnet und besonders bevorzugt auf dieser Platine aufgedruckt. Diese Vorgehensweise hat sich als besonders platzsparend erwiesen. Bevorzugt sind die Windungen der Spule in wenigstens einer Ebene, bevorzugt in genau einer Ebene angeordnet. Dies führt zu einer Kostenreduzierung, weil ein PCB mit wenigen Layern kostengünstiger ist. Daneben kann auch eine Bauraumreduzierung erreicht werden. Dies kann wie erwähnt beispielsweise durch ein Aufdrucken auf eine Platine erreicht werden. Auch der oder die Kondensatoren kann/können auf der Platine angeordnet sein (oder sogar die gesamte Messelektronik).

Bei einer weiteren vorteilhaften Ausführungsform sind mehrere Spulen in einer Ebene angeordnet und bevorzugt sind alle Spulen in einer Ebene angeordnet.

Bei einer weiteren vorteilhaften Ausführungsform weist die Vorrichtung mehrere elektrische Schaltkreise bzw. Schwingkreise auf sowie eine Schalteinrichtung, die bewirkt, dass diese Schaltkreise bzw. Schwingkreise sequentiell mit einer Wechselspannung und insbesondere mit der Wechselspannung eines Signalgenerators beaufschlagt werden. Auf diese Weise können sequentiell mittels der Schalteinrichtung unterschiedliche Schwingkreise bzw. unterschiedliche Einzelsensoreinrichtungen angesprochen werden und für jeden einzelnen dieser Schwingkreise bestimmt werden, ob sich in seiner Umgebung ein Fremdobjekt befindet. Bei einer bevorzugten Ausführungsform handelt es sich bei dieser Schalteinrichtung um einen sog. Multiplexer. Bevorzugt ist die Schalteinrichtung (auch) als Sensorschnittstelle ausgebildet.

Bevorzugt weist die Erfassungseinrichtung eine (induktive) Sensoreinrichtung auf, welche insbesondere wenigstens die eine (induktive) Einzelsensoreinrichtung und bevorzugt eine Vielzahl von (induktiven) Einzelsensoreinrichtungen (bevorzugt mit jeweils einem Schaltkreis und insbesondere Schwingkreis bevorzugt aufweisend wenigstens eine Spule und/oder wenigstens einen Kondensator und/oder wenigstens einen Widerstand) aufweist. Bevorzugt weist eine (jede) Einzelsensoreinrichtung wenigstens eine Spule sowie wenigstens eine damit verbundene Resonanzanpassungseinrichtung (nachfolgend auch als Resonanzanpassung) insbesondere zur Anpassung und/oder Einstellung der Resonanzfrequenz (des Schwingkreises bzw. des Schaltkreises bzw. der Einzelsensoreinrichtung) auf, wobei bevorzugt die Resonanzanpassungseinrichtung geeignet und bestimmt ist, als Filter zu wirken und/oder eine Leistung der Einzelsensoreinrichtung anzupassen. Nachfolgend werden die Einzelsensoreinrichtungen auch als Einzelsensoren oder Sensorfelder bezeichnet. Bevorzugt sind wenigstens zwei, bevorzugt wenigstens zehn, bevorzugt wenigstens 16, bevorzugt wenigstens 32 und besonders bevorzugt wenigstens 64 und/oder höchstens 256 und bevorzugt höchstens 128 und besonders bevorzugt höchstens 64 Einzelsensoreinrichtungen vorgesehen.

Bevorzugt ist jede Einzelsensoreinrichtung mit der Auswerteeinrichtung und/oder dem Signalgenerator und/oder der Messeinrichtung (elektrisch) verbunden und/oder verbindbar. Dabei ist bevorzugt jede Einzelsensoreinrichtung (der Sensoreinrichtung) mit einer/der Sensorschnittstelle und/oder einer/der Schalteinrichtung (Multiplexer) (elektrisch) verbunden und/oder über diese Sensorschnittstelle mit dem Signalgenerator verbindbar.

In einer vorteilhaften Ausführungsform weist die Kalibriereinrichtung wenigstens drei Kalibrierelemente auf, die sich bevorzugt in wenigstens einer elektrischen Eigenschaft bzw. ihren elektrischen Eigenschaften, insbesondere hinsichtlich ihrer Stromleitfähigkeit, jeweils paarweise voneinander unterscheiden. Bevorzugt unterscheiden sich die (wenigstens drei) Kalibrierelemente hinsichtlich ihres elektrischen Widerstands. Besonders bevorzugt handelt es sich bei den Kalibrierelementen um Präzisionswiderstände. Dies bietet den Vorteil, dass diese über einen längeren Zeitraum einen vorgegebenen Widerstandswert innerhalb sehr geringer Toleranzen gewährleisten können und sich damit als Referenz eignen. Grundsätzlich können hierfür alle Widerstandswerte, die sich bevorzugt hinreichend voneinander unterscheiden, gewählt werden. Bevorzugt weist ein Kalibrierelement einen Widerstand(-swert) von 0 Ohm (Kurzschluss) und/oder ein Kalibrierelement einen Widerstand(-swert) von unendlich Ohm (Leerlauf) und/oder ein Kalibrierelement einen Widerstand(-swert) von im Wesentlichen 50 Ohm bzw. (genau) 50 Ohm auf.

In einer vorteilhaften Ausführungsform handelt es sich bei der Kalibriereinrichtung um wenigstens eine mit der Erfassungseinrichtung (und/oder dem Signalgenerator und/oder der Messeinrichtung und/oder der Auswerteeinrichtung) lösbar bzw. temporär verbindbare (wobei bevorzugt zu wenigstens einem Teil bzw. einer Einheit der Kalibriereinrichtung und besonders bevorzugt zu wenigstens zwei und bevorzugt zu allen (separaten) Teilen bzw. Einheiten insbesondere nacheinander (aber nicht zeitgleich) eine derartige Verbindung hergestellt ist bzw. herstellbar ist) und/oder bevorzugt von der Erfassungseinrichtung trennbare Kalibriereinrichtung, welche im Folgenden auch als erste Kalibriereinrichtung bzw. (auch) als Grundkalibriereinrichtung (bzw. als Kalibriereinrichtung zur Vornahme einer Grundkalibrierung) bezeichnet wird. Mit anderen Worten kann die erste Kalibriereinrichtung mechanisch und/oder elektrisch von der Erfassungseinrichtung und insbesondere von dem (bzw. wenigstens einem) Signalgenerator der Erfassungseinrichtung und/oder einer Sensorschnittstelle der Erfassungseinrichtung und/oder der Auswerteeinrichtung und/oder der Messeinrichtung getrennt werden. Bevorzugt ist die erste Kalibriereinrichtung manuell von der Erfassungseinrichtung und/oder der Sensoreinrichtung trennbar. Bevorzugt ist über eine Steckverbindung eine elektrische Verbindung zwischen wenigstens einem Kalibrierelement (bevorzugt allen Kalibrierelementen) der ersten Kalibriereinrichtung und der Sensorschnittstelle der Erfassungseinrichtung herstellbar. Bevorzugt ist wenigstens ein Kalibrierelement der ersten Kalibriereinrichtung im Vergleich zu dem Signalgenerator auf einem verschiedenen bzw. separaten Grundkörper bzw. Platine angeordnet. Insbesondere ist damit die erste Kalibriereinrichtung nicht auf der (Auswerte-)Platine angeordnet, auf der die Auswerteeinrichtung (mit dem Signalgenerator) angeordnet ist.

Bevorzugt weist die Grundkalibriereinrichtung bzw. die erste Kalibriereinrichtung wenigstens eine, bevorzugt wenigstens zwei, bevorzugt wenigstens drei und besonders bevorzugt genau drei Kalibriereinheiten auf. Bevorzugt sind die Kalibriereinheiten insbesondere nacheinander jeweils mit der Erfassungseinrichtung und/oder dem Signalgenerator und/oder der Auswerteeinrichtung (mechanisch und/oder elektrisch) (über dieselbe Sensorschnittstelle der Erfassungseinrichtung) verbindbar. Es ist möglich, dass es sich bei den verschiedenen Kalibriereinheiten um separate und/oder (mechanisch und/oder elektrisch) nicht (paarweise) miteinander verbundene Elemente handelt. Bevorzugt weist jede Kalibriereinheit wenigstens ein Kalibrierelement auf. Bevorzugt weist jede Kalibriereinheit eine Vielzahl von Kalibrierelementen auf, wobei besonders bevorzugt die Anzahl der Kalibrierelemente der und bevorzugt jeder Kalibriereinrichtung der Anzahl der Einzelsensoreinrichtungen entspricht. Dies bietet den Vorteil, dass für jede Einzelsensoreinrichtung (wenigstens) ein (und bevorzugt genau ein) Kalibrierelement (je Kalibriereinheit) vorhanden ist, so dass vorteilhaft jede elektrische Verbindung zwischen einer Einzelsensoreinrichtung und dem Signalgenerator und/oder der Messeinrichtung und/oder der Auswerteeinrichtung durch jeweils ein eigenes Kalibrierelement (welches anstelle der Einzelsensoreinrichtung mit der Schalteinrichtung und/oder der Sensoreinrichtung verbunden ist) überprüft bzw. kalibriert werden kann. Bevorzugt weist jede Kalibriereinheit wenigstens zwei, bevorzugt wenigstens zehn, bevorzugt wenigstens 16, bevorzugt wenigstens 32 und besonders bevorzugt wenigstens 64 und/oder höchstens 256 und bevorzugt höchstens 128 und besonders bevorzugt höchstens 64 Kalibrierelemente auf. Bevorzugt weist jede Kalibriereinheit baugleiche und/oder identische und/oder denselben elektrischen Widerstand aufweisende Kalibrierelemente auf. Bevorzugt weisen wenigstens zwei Kalibriereinheiten und bevorzugt alle Kalibriereinheiten (jeweils) sich (hinsichtlich ihrer Stromleiteigenschaften und bevorzugt in ihren elektrischen Widerstandswerten) voneinander unterscheidende Kalibrierelemente auf.

Bevorzugt ist die erste Kalibriereinrichtung während eines Ladebetriebs bzw. während eines Ladevorgangs der Ladeanordnung (bevorzugt vollständig) nicht an der Erfassungseinrichtung und/oder der Ladeanordnung angeordnet bzw. mit dieser (mechanisch und/oder elektrisch) (fest) verbunden.

In einer weiteren vorteilhaften Ausführungsform weist die Erfassungseinrichtung (wenigstens) eine (und bevorzugt genau eine) permanent mit ihr verbundene Kalibriereinrichtung auf, welche als zweite Kalibriereinrichtung (bzw. als Kalibriereinrichtung zur Vornahme der Kalibrierung zur Laufzeit) bezeichnet wird. Bevorzugt ist die zweite Kalibriereinrichtung (dauerhaft) mechanisch und insbesondere auch dauerhaft mit der Erfassungseinrichtung und insbesondere mit der Auswerteeinrichtung und/oder der Messeinrichtung und/oder dem Signalgenerator verbunden und/oder bevorzugt stationär an der Erfassungseinrichtung angeordnet. Bevorzugt ist die zweite Kalibriereinrichtung und insbesondere wenigstens ein Kalibrierelement hiervon auf der (Auswerte-)Platine angeordnet, auf der ebenfalls der Signalgenerator und/oder wenigstens teilweise die Messeinrichtung und/oder wenigstens teilweise die Auswerteeinrichtung angeordnet ist. Bevorzugt ist die zweite Kalibriereinrichtung zum Verbleib an bzw. auf der Erfassungseinrichtung geeignet und bestimmt.

Bevorzugt weist die zweite Kalibriereinrichtung wenigstens zwei und bevorzugt wenigstens drei und besonders bevorzugt genau drei Kalibrierelemente auf. Bevorzugt weisen die (bevorzugt drei) Kalibrierelemente jeweils (paarweise voneinander) unterschiedliche Widerstandswerte und/oder Stromleiteigenschaften auf. Bevorzugt sind die Kalibrierelemente der zweiten Kalibriereinrichtung nicht baugleiche bzw. identische Bauelemente. Bevorzugt weist ein Kalibrierelement der zweiten Kalibriereinrichtung einen Widerstandswert von 0 Ohm (Kurzschluss) und/oder ein Kalibrierelement der zweiten Kalibriereinrichtung einen Widerstandswert von unendlich Ohm (Leerlauf) und/oder ein Kalibrierelement der zweiten Kalibriereinrichtung einen Widerstand von im Wesentlichen 50 Ohm bzw. (genau) 50 Ohm auf.

Bevorzugt stimmt die Anzahl der Kalibriereinheiten der ersten Kalibriereinrichtung mit der Anzahl der (bevorzugt verschiedenen und/oder mit der Gesamtzahl an) Kalibrierelemente der zweiten Kalibriereinrichtung überein. Bevorzugt ist wenigstens ein und bevorzugt jedes Kalibrierelement der zweiten Kalibriereinrichtung identisch und/oder baugleich zu wenigstens einem und bevorzugt jedem Kalibrierelement von (bevorzugt jeweils genau) einer Kalibriereinheit der ersten Kalibriereinrichtung und/oder weisen bevorzugt entsprechend identische Stromleiteigenschaften und/oder identischen elektrischen Widerstand auf. Dies bietet den Vorteil, dass im Rahmen der Kalibrierung über die erste Kalibriereinrichtung und über die zweite Kalibriereinrichtung (jeweils) baugleiche Kalibrierelemente verwendet werden. Dies bietet den Vorteil einer unmittelbareren Vergleichbarkeit bzw. einem identischen elektrischen Verhalten und/oder bevorzugt einer erwarteten gleichen zeitlichen Alterung bzw. Änderung der Kalibrierelemente. Es wird allerdings darauf hingewiesen, dass die zweite Kalibriereinrichtung auch wenigstens ein Kalibrierelement und bevorzugt alle Kalibrierelemente mit anderen Stromleiteigenschaften bzw. elektrischen Widerständen bezogen (jeweils) auf die Kalibrierelemente der ersten Kalibriereinrichtung aufweisen kann.

Bevorzugt ist die Erfassungseinrichtung dazu geeignet und bestimmt, dass insbesondere zeitgleich (zumindest teilweise) die erste Kalibriereinrichtung (bzw. zumindest eine Kalibriereinheit der ersten Kalibriereinrichtung) und (bevorzugt vollständig) die zweite Kalibriereinrichtung (bzw. zumindest wenigstens drei Kalibrierelemente der zweiten Kalibriereinrichtung) an ihr angeordnet bzw. mit ihr (und/oder an der Auswerteeinrichtung) (mechanisch und/oder elektrisch) verbunden sind. Bevorzugt ist die Erfassungseinrichtung dazu geeignet und bestimmt, dass insbesondere zeitgleich (bevorzugt vollständig) die zweite Kalibriereinrichtung (bzw. zumindest wenigstens drei Kalibrierelemente der zweiten Kalibriereinrichtung) und die Sensoreinrichtung bzw. wenigstens eine Einzelsensoreinrichtung und bevorzugt alle Einzelsensoreinrichtungen (der Sensoreinrichtung) an ihr angeordnet bzw. mit ihr (und/oder an der Auswerteeinrichtung) (mechanisch und/oder elektrisch) verbunden sind. Bevorzugt ist entweder (zumindest teilweise) die erste Kalibriereinrichtung (bzw. zumindest eine Kalibriereinheit der ersten Kalibriereinrichtung) oder (ausschließliches oder) die Sensoreinrichtung bzw. wenigstens eine Einzelsensoreinrichtung an der Erfassungseinrichtung angeordnet bzw. mit dieser verbunden. Bevorzugt ist insbesondere während der Vornahme einer Messung an wenigstens einem Schaltkreis bzw. Schwingkreis bzw. wenigstens einer Einzelsensoreinrichtung die erste Kalibriereinrichtung (bzw. sind deren Kalibriereinheiten und/oder Kalibrierelemente) nicht mit der Erfassungseinrichtung und insbesondere dem Signalgenerator und/oder insbesondere der Messeinrichtung und/oder insbesondere der Auswerteeinrichtung verbunden. Bevorzugt ist insbesondere während der Vornahme einer Messung an wenigstens einem Schaltkreis bzw. Schwingkreis bzw. wenigstens einer Einzelsensoreinrichtung die zweite Kalibriereinrichtung bzw. wenigstens ein Kalibrierelement der zweiten Kalibriereinrichtung mit der Erfassungseinrichtung und insbesondere dem Signalgenerator und/oder insbesondere der Messeinrichtung und/oder insbesondere der Auswerteeinrichtung (zumindest mechanisch und bevorzugt elektrisch) verbunden.

In einer weiteren vorteilhaften Ausführungsform ist die Auswerteeinrichtung dazu geeignet und bestimmt, in Abhängigkeit von einer für die Einzelsensoreinrichtung charakteristischen elektrischen Größe festzustellen, ob in der Umgebung der Einzelsensoreinrichtung (bzw. Sensoreinrichtung) ein gegenüber dieser Einzelsensoreinrichtung (bzw. Sensoreinrichtung) bewegliches Objekt befindlich ist, wobei bei dieser Feststellung wenigstens eine Kalibriergröße berücksichtigt wird, die von wenigstens einer für das Kalibrierelement charakteristischen elektrischen Größe abhängig ist.

In einer weiteren vorteilhaften Ausführungsform weist die Erfassungseinrichtung und insbesondere die Auswerteeinrichtung eine Speichereinrichtung auf, in der die von der Auswerteeinrichtung und/oder Messeinrichtung erfassten und/oder gemessenen elektrischen Größen (charakteristisch für wenigstens ein Kalibrierelement (bevorzugt für alle Kalibrierelemente) der ersten und/oder zweiten Kalibriereinrichtung und/oder charakteristisch für wenigstens eine Einzelsensoreinrichtung (und bevorzugt für alle Einzelsensoreinrichtungen) und/oder berechnete bzw. bestimmte Kalibriergrößen abgelegt und/oder abgerufen werden können.

Bevorzugt weist die Erfassungseinrichtung und insbesondere die Auswerteeinrichtung einen Prozessor bzw. eine Recheneinrichtung auf, die bevorzugt wenigstens eine für eine Einzelsensoreinrichtung (insbesondere für jede Einzelsensoreinrichtung) charakteristische Kalibriergröße bzw. die bevorzugt für die Einzelsensoreinrichtung (insbesondere für jede Einzelsensoreinrichtung) wenigstens eine Kalibriergröße bestimmt und/oder berechnet. Bevorzugt erfolgt die Bestimmung und/oder Berechnung in Abhängigkeit von und/oder unter Berücksichtigung wenigstens einer für die (jeweilige) Einzelsensoreinrichtung (gemessenen und/oder erfassten) charakteristischen elektrischen Größe und/oder unter Berücksichtigung von wenigstens einer für die erste Kalibriereinrichtung (gemessenen und/oder erfassten) charakteristischen elektrischen Größe und/oder von wenigstens einer für die zweite Kalibriereinrichtung (gemessenen und/oder erfassten) charakteristischen elektrischen Größe. Dabei erfolgt die Bestimmung und/oder Berechnung bevorzugt in Abhängigkeit von wenigstens einer, bevorzugt wenigstens zwei und besonders bevorzugt wenigstens drei für (jeweils) ein (anderes) Kalibrierelement der zweiten Kalibriereinrichtung charakteristischen elektrischen Größe. Dabei erfolgt die Bestimmung und/oder Berechnung bevorzugt in Abhängigkeit von wenigstens einer, bevorzugt wenigstens zwei und besonders bevorzugt wenigstens drei für (jeweils) ein Kalibrierelement (einer anderen Kalibriereinheit) der ersten Kalibriereinrichtung charakteristischen elektrischen Größe.

Die vorliegende Erfindung ist weiterhin auf ein Verfahren zum Erfassen von Objekten, insbesondere bei Ladeanordnungen zum Laden von elektrisch betriebenen Einrichtungen, mittels einer Erfassungseinrichtung gerichtet, wobei das Verfahren das Beaufschlagen wenigstens einer Einzelsensoreinrichtung aufweisend einen elektrischen Schaltkreis (insbesondere Schwingkreis), der wenigstens eine Erfassungsspule und/oder wenigstens einen Widerstand und/oder wenigstens einen Kondensator (bevorzugt mit wenigstens zwei Spulen und/oder wenigstens einem Kondensator) aufweist, (von einem Signalgenerator bzw. Frequenzgenerator) mit einer Wechselspannung und das Messen wenigstens einer für die Einzelsensoreinrichtung charakteristischen elektrischen Größe umfasst. Bevorzugt handelt es sich bei den elektrisch betriebenen Einrichtungen um mobile Einrichtungen und besonders bevorzugt um Fahrzeuge, etwa Kraftfahrzeuge. Insbesondere handelt es sich auch verfahrensseitig besonders bevorzugt um einen Fremdkörper, der nicht bestimmungsgemäß in der Umgebung des besagten Schaltkreises bzw. Schwingkreises ist.

Weiterhin wird erfindungsgemäß wenigstens ein Kalibrierelement mit Wechselspannung beaufschlagt und wenigstens eine für dieses Kalibrierelement charakteristische elektrische Größe gemessen, wobei in Abhängigkeit von dieser für die Einzelsensoreinrichtung charakteristischen Größe festgestellt wird, ob in der Umgebung der Einzelsensoreinrichtung (und/oder der Sensoreinrichtung) ein gegenüber dieser Einzelsensoreinrichtung (und/oder der Sensoreinrichtung) bewegliches Objekt befindlich ist, wobei bei dieser Feststellung wenigstens eine Kalibriergröße berücksichtigt wird, die von wenigstens der für das Kalibrierelement charakteristischen elektrischen Größe abhängig ist.

Vorteilhaft wird zur Erfassung der Objekte eine Frequenz des Signalgenerators verändert und insbesondere diejenige Frequenz, mit der der wenigstens eine Schwingkreis beaufschlagt wird. Vorzugsweise wird die Frequenz in einem vorgegebenen Frequenzbereich bzw. Frequenzband durchgestimmt.

Bevorzugt werden wenigstens zwei parallel oder in Serie geschaltete Spulen betrieben bzw. mit der Wechselspannung beaufschlagt. Vorteilhaft werden wenigstens zwei Einzelsensoreinrichtungen (bzw. Schwingkreise) insbesondere sequentiell, d. h. in Abfolge von der Wechselspannung bzw. dem Frequenzgenerator betrieben.

Bei einem weiteren bevorzugten Verfahren wird eine Rückflussdämpfung (Rückflussdämpfung = return loss) bestimmt, was dem unten noch genauer erläuterten Wert S11 entspricht. Daneben oder kumulativ kann auch die Durchgangsspannung berücksichtigt werden, welche sich aus dem unten noch genauer erläuterten Wert S21 ergibt. Es wird darauf hingewiesen, dass die hier erwähnten S- Parameter direkt mit dem Impedanzverhalten des Schwingkreises zusammenhängen so dass bei oder in der Umgebung der Resonanzfrequenz das signifikanteste S-Parameter-Verhalten auftritt.

Bei einem weiteren bevorzugten Verfahren wird eine Eigenfrequenz des Schwingkreises, insbesondere auch in Abhängigkeit von der Anwesenheit des zu erfassenden Objekts bestimmt.

In einer vorteilhaften Ausführungsform werden wenigstens drei, insbesondere sich paarweise wenigstens in einer elektrischen Eigenschaft voneinander unterscheidende, Kalibrierelemente (der ersten und/oder zweiten Kalibriereinrichtung) mit Wechselspannung beaufschlagt. Bevorzugt wird jeweils eine für das jeweilige Kalibrierelement (der ersten und/oder zweiten Kalibriereinrichtung) charakteristische elektrische Größe gemessen, wobei die Kalibriergröße von wenigstens diesen dreien, charakteristischen elektrischen Größen abhängig ist. Mit anderen Worten wird bevorzugt die Kalibriergröße in Abhängigkeit von wenigstens einer, bevorzugt wenigstens zwei und besonders bevorzugt wenigstens drei gemessenen, für (je) ein (anderes) Kalibrierelement (der ersten Kalibriereinrichtung und/oder der zweiten Kalibriereinrichtung) charakteristische(n) elektrische(n) Größe(n) bestimmt bzw. berechnet.

In einer weiteren vorteilhaften Ausführungsform wird mittels einer ersten Kalibriereinrichtung eine erste Kalibrierung wenigstens eines Messverfahrens der Erfassungseinrichtung vorgenommen und, insbesondere zeitlich verzögert bzw. zeitlich nachfolgend, mittels einer zweiten Kalibriereinrichtung eine weitere Kalibrierung des Messverfahrens vorgenommen. Insbesondere wird damit ein Objekterfassungsverfahren der Erfassungseinrichtung kalibriert.

In einer weiteren vorteilhaften Ausführungsform erfolgt die mittels der zweiten Kalibriereinrichtung vorgenommene wenigstens eine weitere und bevorzugt wenigstens zwei weitere und besonders bevorzugt eine Vielzahl weiterer Kalibrierung(en) unter Berücksichtigung der Ergebnisse der ersten Kalibrierung durch die erste Kalibriereinrichtung. Mit anderen Worten wird bevorzugt mit der ersten Kalibriereinrichtung einmalig (eine Grundkalibrierung) (ggf. unter Zuhilfenahme bzw. Verwendung der zweiten Kalibriereinrichtung) vorgenommen. Weitere Kalibrierungen (zu späteren Zeitpunkten) erfolgen dann bevorzugt ausschließlich unter Verwendung der zweiten Kalibriereinrichtung, also ohne (erneuter) Verwendung bzw. Durchführung von Messungen an der ersten Kalibriereinrichtung (zu diesen späteren Zeitpunkten). Allerdings wird bei der Berechnung der Kalibriergröße zu einem späteren Zeitpunkt auf die einmalig mit der ersten Kalibriereinrichtung durchgeführte Grundkalibrierung und insbesondere der darin erhaltenen bzw. erfassten charakteristischen elektrischen Größen und/oder Kalibriergrößen und/oder Ergebnisse zurückgegriffen und diese zumindest teilweise bei der Berechnung der Kalibriergröße berücksichtigt.

In einer weiteren vorteilhaften Ausführungsform erfolgt die mittels der zweiten Kalibriereinrichtung vorgenommene weitere Kalibrierung (welche bevorzugt zu einem späteren Zeitpunkt als die Grundkalibrierung bzw. eine Kalibrierung mittels der ersten Kalibriereinrichtung erfolgt) ohne Verwendung der ersten Kalibriereinrichtung.

Bevorzugt wird zur Ermittlung wenigstens einer Kalibriergröße ein Verhältnis gebildet aus wenigstens einem für ein Kalibrierelement der zweiten Kalibriereinrichtung (erfasste bzw. gemessene) charakteristischen elektrischen Größe und wenigstens einer für dasselbe Kalibrierelement zu einem späteren Zeitpunkt bestimmten (erfassten bzw. gemessenen) charakteristischen Größe.

In einer weiteren vorteilhaften Ausführungsform erfolgt die mittels der zweiten Kalibriereinrichtung vorgenommene weitere Kalibrierung basierend auf wenigstens einem und bevorzugt drei permanent an der Erfassungseinrichtung angeordneten und insbesondere mit wenigstens einem Bauelement der Erfassungseinrichtung elektrisch verbundenen Kalibrierelementen.

In einer weiteren vorteilhaften Ausführungsform wird bzw. ist die erste Kalibriereinrichtung zur Vornahme der ersten Kalibrierung lösbar mit der Erfassungseinrichtung, insbesondere an eine bzw. einer (bzw. über eine) Sensorschnittstelle zur elektrischen Verbindung der Einzelsensoreinrichtung und/oder einer Sensoreinrichtung mit einem Signalgenerator, verbunden.

In einer weiteren vorteilhaften Ausführungsform werden mittels der zweiten Kalibriereinrichtung mindestens zwei und bevorzugt eine Vielzahl weiterer Kalibrierungen, bevorzugt jeweils nach Vornahme mindestens einer Messung einer für die Einzelsensoreinrichtung charakteristischen elektrischen Größe, vorgenommen. Bevorzugt wird unter Messzyklus die sukzessive bzw. (unmittelbar) nacheinander stattfindende Messung bzw. Erfassung von charakteristischen elektrischen Größen einer Vielzahl (bevorzugt aller) Einzelsensoreinrichtungen verstanden. Mit anderen Worten wird damit in einem Messzyklus bevorzugt für jede Einzelsensoreinrichtung (bevorzugt jeweils für jede vorgegebene Frequenz) genau eine charakteristische elektrische Größe erfasst bzw. gemessen.

Bevorzugt findet nach jedem Messzyklus wenigstens eine und bevorzugt genau eine (Laufzeit-)Kalibriermessung an der zweiten Kalibriereinrichtung (bevorzugt jeweils für jede vorgegebene Frequenz) statt, wobei bevorzugt hierbei für jedes Kalibrierelement der zweiten Kalibriereinrichtung wenigstens eine und insbesondere genau eine charakteristische elektrische Größe erfasst bzw. gemessen wird. Damit finden bevorzugt nach einem Messzyklus drei Einzelkalibriermessungen statt, bei denen jeweils eine für jedes Kalibrierelement der zweiten Kalibriereinrichtung charakteristische elektrische Größe erfasst bzw. gemessen wird. Beispielsweise können im Falle von 64 Einzelsensoreinrichtungen auf die sukzessive Vermessung der 64 Einzelsensoreinrichtung drei Einzelkalibriermessungen (der drei Kalibrierelemente der zweiten Kalibriereinrichtung) folgen.

Bevorzugt findet nach (höchstens) jedem zweiten, bevorzugt nach jedem dritten, bevorzugt nach (höchstens) jedem vierten, bevorzugt nach (höchstens) jedem zehnten und/oder nach mindestens jedem zwanzigsten, bevorzugt nach mindestens jedem zehnten Messzyklus eine Kalibriermessung mittels der zweiten Kalibriereinrichtung (bevorzugt jeweils für jede vorgegebene Frequenz) statt, in der bevorzugt jeweils (wenigstens und bevorzugt genau) eine für jedes Kalibrierelement der zweiten Kalibriereinrichtung charakteristische elektrische Größe erfasst bzw. gemessen wird.

Bevorzugt erfolgt eine Kalibriermessung mittels der zweiten Kalibriereinrichtung (in der bevorzugt jeweils (wenigstens und bevorzugt genau) eine für jedes Kalibrierelement der zweiten Kalibriereinrichtung charakteristische elektrische Größe erfasst bzw. gemessen wird) nach festen Zeitabständen (die bevorzugt von einer Zeitgebereinrichtung vorgegeben bzw. initiiert werden können). Beispielsweise können Kalibriermessungen mittels der zweiten Kalibriereinrichtung nach jeweils einer Sekunde vorgenommen werden. Dies bietet den Vorteil, dass beispielsweise nach einem Zeitabschnitt von 10 s erwartete Änderungen überwacht bzw. kontrolliert bzw. mitberücksichtigt werden können. Die festen Zeitabstände zwischen zwei aufeinanderfolgenden sind bevorzugt ausgewählt aus einem Bereich zwischen 1/10 s und 10 min, bevorzugt zwischen 1/5 s und 1 min und besonders bevorzugt zwischen ½ s und 5 s.

Bevorzugt erfolgt die Bestimmung wenigstens einer Kalibriergröße und besonders bevorzugt aller Kalibriergrößen unter Zugrundelegung eines linearen Fehlermodells. Bevorzugt erfolgt eine Kalibrierung (einer nicht-kalibrierten bzw. gemessenen) Größe durch eine lineare Abbildung bzw. eine lineare Transformation. Bevorzugt wird hierfür eine für eine hinlaufende (normierte) Wellengröße charakteristische (elektrische) Größe (für eine Einzelsensoreinrichtung) und/oder eine für eine rücklaufende (normierte) Wellengröße charakteristische (elektrische) Größe (für diese Einzelsensoreinrichtung) linear transformiert bzw. abgebildet. Bevorzugt wird eine durch eine Matrix repräsentierte, bevorzugt durch eine 2x2-Matrix repräsentierte, lineare Abbildung eines Vektors gebildet aus einer für eine hinlaufende (normierte) Wellengröße charakteristischen (elektrischen) Größe (für eine Einzelsensoreinrichtung) und einer für eine rücklaufende (normierte) Wellengröße charakteristischen (elektrischen) Größe (für diese Einzelsensoreinrichtung) (zur Kalibrierung) vorgenommen. Bevorzugt werden (wenigstens drei und besonders bevorzugt genau drei) der Einträge der Matrix mittels der ersten Kalibriereinrichtung und/oder mittels der zweiten Kalibriereinrichtung bestimmt.

Bevorzugt weist das Verfahren einzelne oder mehrere der folgenden (bevorzugt zeitlich nacheinander erfolgende) Verfahrensschritte der Grundkalibrierung auf:

- Bevorzugt werden sukzessive wenigstens drei Kalibriereinheiten einer ersten Kalibriereinrichtung an der Erfassungseinrichtung und insbesondere an der Sensorschnittstelle angeordnet (und insbesondere elektrisch verbunden) und werden bevorzugt nacheinander vermessen bzw. bevorzugt wird nacheinander für wenigstens ein und bevorzugt für jedes Kalibrierelement (jeder Kalibriereinrichtung) wenigstens eine für dieses Kalibrierelement charakteristische elektrische Größe (bevorzugt für jede vorgegebene Frequenz) (bei Beaufschlagung dieser mit Wechselspannung durch den Signalgenerator) bestimmt bzw. erfasst bzw. gemessen.
  Bevorzugt sind die drei Kalibriereinheiten (jeweils) anstelle der Sensoreinrichtung bzw. der Einzelsensoreinrichtungen an der Erfassungseinrichtung angeordnet.
- Bevorzugt werden aus den erfassten bzw. bestimmten bzw. gemessenen charakteristischen Größen Fehlerkoeffizienten (für die Messpfade, also bevorzugt der elektrischen Verbindungsleitung zwischen dem Signalgenerator über das jeweilige Kalibrierelement der ersten Kalibriereinrichtung zur Messeinrichtung) zum Zeitpunkt der Grundkalibrierung (bzw. bei Inbetriebnahme) (bevorzugt für jede vorgegebene Frequenz) bestimmt.
- Bevorzugt wird bzw. werden insbesondere sukzessive das Kalibrierelement der zweiten Kalibriereinrichtung bzw. die (bevorzugt alle) Kalibrierelemente der zweiten Kalibriereinrichtung von dem Signalgenerator mit Wechselspannung beaufschlagt und insbesondere (jeweils) wenigstens eine für das jeweilige Kalibrierelement charakteristische (elektrische) Größe (bevorzugt für jede vorgegebene Frequenz) bestimmt bzw. gemessen bzw. erfasst.
  Bevorzugt wird aus den erhaltenen charakteristischen Größen mindestens ein Fehlerkoeffizient und bevorzugt mindestens drei Fehlerkoeffizienten zum Zeitpunkt der Grundkalibrierung (bevorzugt für jede vorgegebene Frequenz) für den Referenzpfad (also bevorzugt der elektrischen Verbindungsleitung zwischen dem Signalgenerator über das jeweilige Kalibrierelement der zweiten Kalibriereinrichtung zur Messeinrichtung) bestimmt.
- Bevorzugt wird (zeitlich vor, nach oder während dem vorangegangenen Schritt der Messung an der zweiten Kalibriereinrichtung) die erste Kalibriereinrichtung von der Erfassungseinrichtung getrennt und insbesondere entfernt.
  Bevorzugt wird die Sensoreinrichtung und/oder wenigstens eine Einzelsensoreinrichtung an der Erfassungseinrichtung und insbesondere der Sensorschnittstelle angeordnet.

Bevorzugt weist das Verfahren einzelne oder mehrere der folgenden (bevorzugt zeitlich nacheinander erfolgende) Verfahrensschritte der Laufzeitkalibrierung auf:

- Es wird zu mindestens einer Einzelsensoreinrichtung und bevorzugt zu jeder Einzelsensoreinrichtung (insbesondere zu jeder vorgegebenen Frequenz) eine für diese Einzelsensoreinrichtung charakteristische elektrische Größe ermittelt bzw. erfasst bzw. gemessen. Dieser Schritt kann unmittelbar hintereinander mehrere Male durchgeführt werden.
- Bevorzugt wird für jedes Kalibrierelement der zweiten Kalibriereinrichtung insbesondere sukzessive (nach Beaufschlagen mit Spannung über den Signalgenerator) wenigstens eine hierfür charakteristische elektrische Größe (bzw. Streuparameter) (für jede vorgegebene Frequenz) (zu diesem Laufzeitpunkt) erfasst bzw. bestimmt bzw. gemessen.
- Für jedes Kalibrierelement der zweiten Kalibriereinrichtung wird bevorzugt ein Verhältnis aus zwei durch dessen Vermessung (an diesem Laufzeitpunkt) erhaltenen charakteristischen elektrischen Größen (für jede vorgegebene Frequenz) gebildet.
- Bestimmung mindestens eines Fehlerkoeffizienten und bevorzugt von mindestens drei für den Referenzpfad charakteristischen Fehlerkoeffizienten (für jede vorgegebene Frequenz).
- Bevorzugt wird bezüglich jedem zu dem Laufzeitpunkt bestimmten Fehlerkoeffizienten ein Verhältnis zu dem entsprechenden Fehlerkoeffizienten zum Zeitpunkt der Grundkalibrierung gebildet.
- Aus diesen Verhältnissen wird unter Berücksichtigung der Fehlerkoeffizienten der Messpfade zum Zeitpunkt der Grundkalibrierung eine Bestimmung (bzw. Abschätzung) der Fehlerkoeffizienten der Messpfade zum Laufzeitpunkt vorgenommen.

Weitere Vorteile und Ausführungsformen ergeben sich aus den beigefügten Zeichnungen und deren Beschreibung, wobei in diesem Zusammenhang das Prinzip und der Aufbau für eine mögliche Realisierung einer Fremdobjekterkennung bzw. einer Erfassungseinrichtung bzw. eine Ausführungsform eines erfindungsgemäßen Verfahrens bzw. einer Ladeanordnung beschrieben wird.

Darin zeigen:

Fig. 1 eine Veranschaulichung der Streuparameter an einem Zweipol;

Fig. 2 eine schematische Darstellung einer Erfassungseinrichtung in einer Ausführungsform;

Fig. 3 eine schematische Darstellung einer Auswerteeinrichtung in einer Ausführungsform;

Fig. 4 eine schematische Darstellung einer Sensoreinrichtung in einer Ausführungsform;

Fig. 5 eine Darstellung eines Signalflussplans in einer Erfassungseinrichtung gemäß einer Ausführungsform;

Fig. 6 eine Darstellung eines Signalflussplans in einer erfindungsgemäßen Erfassungseinrichtung mit einer ersten Kalibriereinrichtung gemäß einer Ausführungsform;

Fig. 7 eine Illustration der Grundkalibrierung mit Messung der Kalibriereinheit A an Sensorfelder;

Fig. 8 eine Illustration der Grundkalibrierung mit Messung der Kalibriereinheit B an Sensorfelder;

Fig. 9 eine Illustration der Grundkalibrierung mit Messung der Kalibriereinheit C an Sensorfelder;

Fig. 10 eine Illustration der Grundkalibrierung mit Messung der Kalibrierelemente A, B, C an Referenzpfad;

Fig. 11 eine Illustration der Kalibrierung zur Laufzeit mit Messung der Kalibrierelemente A, B, C an Referenzpfad;

Fig. 12 eine Darstellung eines Messvorgangs von der Sensoreinrichtung; und

Fig. 13 a-d vier Darstellungen zur Veranschaulichung einer Einbausituation einer erfindungsgemäßen Ladeanordnung in einer Ausführungsform.

1.1 Messprinzip:

Im vorliegenden System erfolgt die Charakterisierung der elektrischen Sensoreigenschaften durch die vektorielle Messung von Streuparametern an zweipoligen Sensoren.

Streuparameter, die einen Zweipol bzw. ein Eintor beschreiben, beschränken sich auf $S_{11}$ äquivalent zum Reflektionsfaktor $\Gamma$. Er beschreibt das Verhältnis von reflektierter Welle $b_i$ zur hinlaufenden Welle $a_i$ und charakterisiert vollständig die linearen Eigenschaften eines Eintors. Der Reflektionsfaktor kann ohne Einschränkungen auf die Eingangsimpedanz eines Eintors umgerechnet werden. Die gängige Darstellung dieser Größe erfolgt im Frequenzbereich. Für jede Messfrequenz $\omega_i$ existiert folglich ein komplexer Wert des Reflektionsfaktors bestehend aus Betrag und Phase

$$S_{11} \triangleq \Gamma = f\{\omega\} = \Gamma(\omega_i) \triangleq \Gamma_i = |\Gamma_i| \cdot e^{i \cdot \arg(\Gamma_i)}$$

$$= \frac{b(\omega_i)}{a(\omega_i)} = \frac{b_i}{a_i} = \frac{|b_i|}{|a_i|} \cdot e^{i \cdot [\arg(b_i) - \arg(a_i)]}$$

Die Auswertung der Messsignale basiert auf der oben beschriebenen Änderung der elektrischen Sensoreigenschaften (bzw. der Änderung der elektrischen Eigenschaften der Sensoreinrichtung 10 bzw. der Einzelsensoreinrichtungen 43), die folglich eine Änderung der gemessenen Reflektionsfaktoren ergeben. Durch die Definition geeigneter Auswerteparameter wäre es möglich, Rückschlüsse auf Fremdobjekte, bzw. deren Größe, Lage und deren Material zu ziehen und damit die Funktion einer Fremdobjekterkennung zu erfüllen.

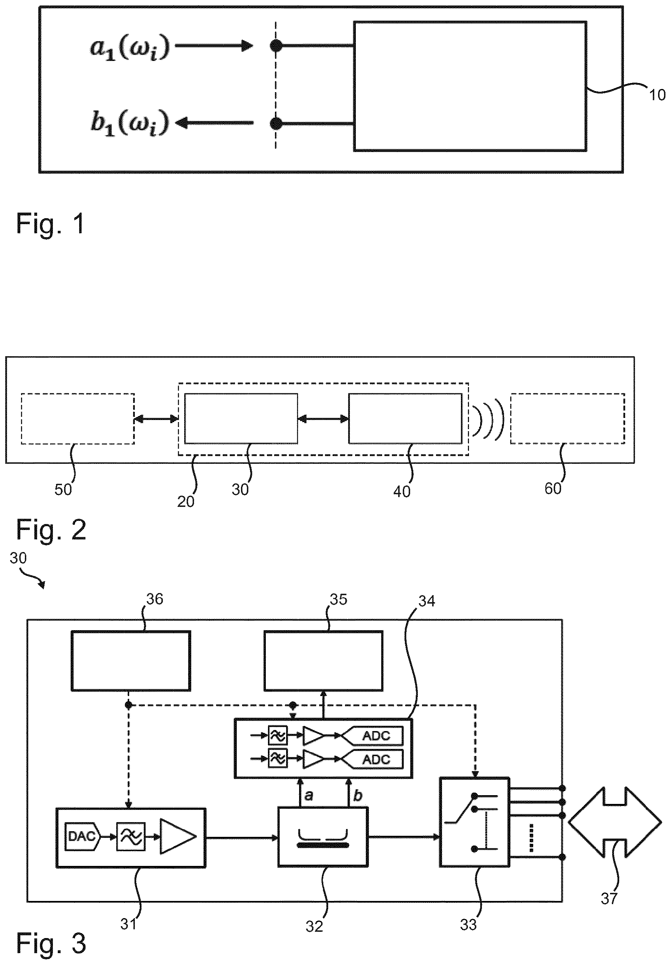

In Fig. 1 ist eine Veranschaulichung der Streuparameter $a_i(\omega_i), b_i(\omega_i)$ an einem Zweipol bzw. Sensor-Zweipol 10 (welcher etwa Teil einer Sensoreinrichtung 40 sein kann) gezeigt.

1.2 Design und Aufbau:

Das FOD-System 20 (bzw. auch Erfassungseinrichtung 20) (FOD- Foreign Object Detection - Fremdobjekterkennung), dargestellt in Figur 2, ist bevorzugt in eine Auswerteelektronik 30 (bzw. Auswerteeinrichtung 30, wobei die Auswerteeinrichtung 30 im Nachfolgenden auch als Auswerteelektronik bezeichnet wird) und eine induktive Sensoreinheit 40 (bzw. Sensoreinrichtung 40, welche im Nachfolgenden auch als Sensoreinheit bezeichnet ist) aufzuteilen. Die Funktion und der Aufbau der einzelnen Komponenten soll im Folgenden näher beschrieben werden.

Dabei steht bevorzugt die Auswerteelektronik 30 in Kommunikationsverbindung mit einer (übergeordneten) Steuereinheit 50 bzw. einer (übergeordneten) Steuerungseinrichtung 50. Über die Sensoreinrichtung 40 kann bevorzugt ein Objekt in dem sich an die Steuerungseinrichtung 50 anschließenden überwachten Raum 60 erfasst werden.

1.2.1 Auswerteelektronik:

Die Auswerteelektronik 30 bildet bevorzugt den Kern des Systems und enthält die komplette Funktionalität, um eine definierte Anzahl $N_{Sensoren}$ an induktiven Sensoren 43 (welche auch als Einzelsensoreinrichtungen 43 bezeichnet werden) nacheinander zu vermessen und Rückschlüsse auf eventuell vorkommende Fremdobjekte schließen zu können. Sie bildet außerdem die Schnittstelle zu den weiteren Systemkomponenten des induktiven Ladesystems, um Meldungen über Erkennungsereignisse weiter geben zu können.

Die Auswerteelektronik 30 (vgl. Figur 3) besteht aus folgenden Funktionsblöcken:

- Signalerzeugung 31: Erzeugung, Anpassung in Amplitude und Frequenz (Filterung und Verstärkung) der Messsignale

- Signaltrennung 32: Auskoppelung von Signalen proportional der vor- und rücklaufenden Wellengrößen a und b, Durchleitung von Messsignal

- Signalverteilung 33 (bzw. Schalteinrichtung): Verteilung des Messsignals (1: $N_{Sensoren}$) zur Vermessung mehrerer Sensorfelder nacheinander im Multiplexbetrieb

- Signalmessung 34 (bzw. bevorzugt auch als Messeinrichtung bezeichnet): Signalkonditionierung (Filterung, Verstärkung) der ausgekoppelten Wellengrößen, Digitalisierung der Wellengrößen $a$ und $b$

- Signalverarbeitung 35: Digitale Filterung, Fehlerkorrektur, Berechnung der Reflektionsfaktoren $\Gamma$, Auswertung relevanter Parameter zur Detektion von Fremdobjekten, ...

- Steuerungseinheit 36: Ablaufsteuerung von Signalerzeugung, -messung, und Durchschalten der einzelnen Sensorfelder, Kommunikation mit übergeordneter Steuereinheit, Benutzerschnittstelle

- Sensorschnittstelle 37: Bildet die bevorzugt die Schnittstelle zur induktiven Sensoreinheit, leitet bevorzugt die Messsignale der einzelnen Sensoren (bzw. Einzelsensoreinrichtungen 43) von und zur Auswerteelektronik

1.2.2 Induktive Sensoreinheit:

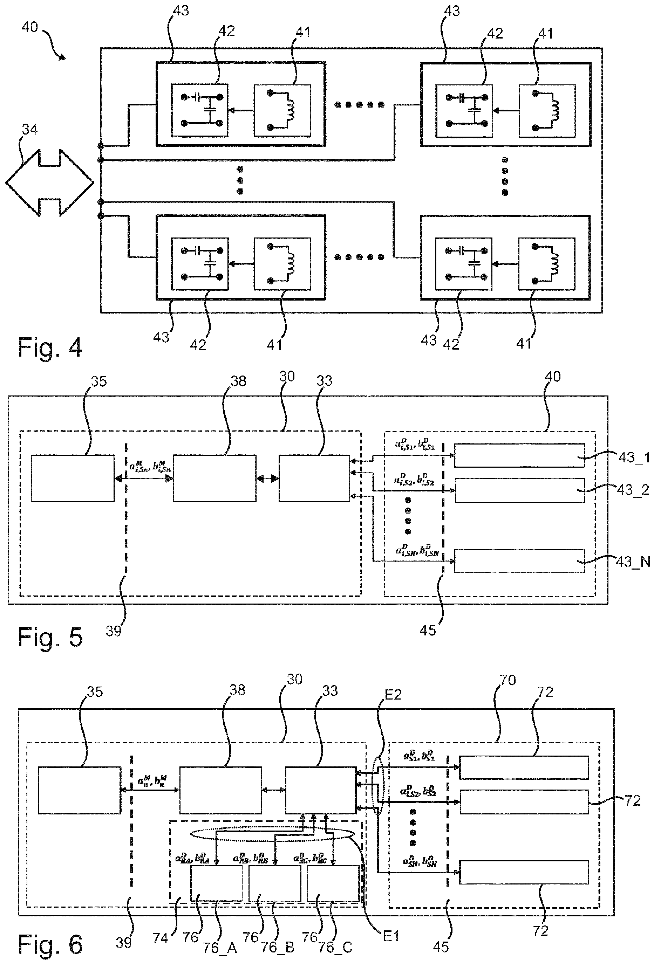

Die induktive Sensoreinheit 40 in Abbildung 4 stellt die eigentlichen Sensoren bereit. Die gesamte Einheit besteht aus einer definierten Anzahl an insbesondere planaren gedruckten Induktivitäten 41 bzw. Spulen 41, die zusammen die gesamte zu erfassende Oberfläche abdecken. Resonanzanpassungen 42 sind bevorzugt mit den Sensorspulen verbunden (Filterwirkung, Leistungsanpassung Sensor,...).

Figur 4 zeigt ein Blockschaltbild der Sensoreinheit bzw. Sensoreinrichtung 40.

Die Kombination aus Induktivität und Resonanzanpassung bildet Einzelsensor(-einrichtung)/en 43, die im Folgenden auch als Sensorfelder bezeichnet werden. Form, Größe und Zusammensetzung dieser Sensorspulen bestimmen das erzeugte magnetische Feld und somit auch den Raum, in dem Fremdobjekte erkannt werden können. Jedes Feld ist separat mit der Auswerteelektronik verbunden, bevorzugt über eine Schnittstelle 34. Die Sensorfelder werden während eines Messvorgangs einzeln nacheinander mit einem Messsignal angeregt und vermessen.

1.2.3 Schnittstellen:

- Übergeordnete Steuereinheit - Auswerteelektronik: Es existiert eine übergeordnete Steuereinheit, die auf Basis der definierten Auswerteparameter Entscheidungen über die Erkennung von Fremdobjekten und folglich das Abschalten des Ladesystems treffen kann. Diese leitungsgebundene Kommunikationsschnittstelle dient zur zyklischen Abfrage von Auswerteparametern der Sensoren, relevanten Systemparametern,...

- Induktive Sensoreinheit - überwachter Raum: Das Umfeld der induktiven Sensoren bildet einen definierten überwachten Raum. Die physikalische Schnittstelle zu diesem Raum, bzw. zu den zu erkennenden Fremdobjekten bildet das von den Sensorfeldern erzeugte Magnetfeld. Es breitet sich über das vorherrschende Medium zwischen Fremdobjekt und Sensor drahtlos aus. Es handelt im vorliegenden System somit um ein "kontaktloses" Sensorsystem (Fremdobjekt muss GA (Ground Assembly - Bodeneinheit des induktiven Ladesystems) nicht berühren!).

1.2.4 Messablauf:

Da ein Messkanal, jedoch mehrere Sensorfelder existieren, ist es nötig, die Sensorfelder im Zeitmultiplexbetrieb zu vermessen.

Jedes Sensorfeld wird eine definierte Zeit $T_{Mess}$ vermessen. Zusätzlich wird zwischen den Messungen einzelner Sensorfelder eine definierte Pause $T_{Pause}$ eingehalten (Multiplexer umschalten, digitalisierte Werte zwischenspeichern, Einschwingvorgang nächstes Sensorfeld). Die Gesamtzeit für einen Messzyklus, also die einmalige Vermessung aller Sensoren, ergibt sich somit zu

$$T_{Zyklus} = (T_{Mess} + T_{Pause}) \cdot N_{Sensoren}$$

Ein Sensorfeld, das die Beeinflussung durch ein Fremdobjekt erfährt, ist im schlechtesten Fall also erst nach der Zeit $T_{Zyklus}$ mit Sicherheit vermessen. $T_{Zyklus}$ bestimmt also im Wesentlichen die Reaktionszeit des Systems. Werden in einer späteren Verarbeitung die Messwerte zusätzlich gemittelt oder gefiltert, erhöht sich die Reaktionszeit zusätzlich um einen Faktor.

Das Messsystem ist derart ausgelegt, dass die komplette Verarbeitung der aufgenommenen Daten von $Feld_n$ in der Zeit der Aufnahme der Daten von $Feld_{n+1}$ erfolgt. Da außer die oben beschriebenen Zeiten keine weiteren Pausen- oder Verzögerungszeiten anfallen, kann von einem Echtzeitmesssystem mit definierter Reaktionszeit gesprochen werden.

2. Problemstellung durch verfälschte Messwerte:

Ziel des Systems ist das Messen elektrischer Parameter der Sensorspulen. Es ist anzunehmen, dass sich diese Parameter bei kleinen Fremdobjekten nur geringfügig verändern (z.B. relative Änderung Induktivität $\approx 0.1\%$ bei Fremdobjekt Büroklammer). Dadurch müssen die Messwerte mit hoher Präzision erfasst werden, um in einer weiterführenden Signalverarbeitung Änderungen schätzen und Rückschlüsse auf Art und Weise der Änderungen ziehen zu können. Messfehler würden diese Ergebnisse massiv verfälschen oder eine weitere Verarbeitung der Daten gar unmöglich machen. Aus diesem Grund muss eine Strategie entwickelt werden, um Messfehler weitestgehend zu verhindern, bzw. zu minimieren. Dazu ist ein tieferes Verständnis von Art und Entstehung von Fehlern nötig, worauf im Folgenden näher eingegangen wird.

2.1. Beschreibung der auftretenden Messfehler:

Jede Messung einer physikalischen Größe ist aus verschiedensten Gründen mit Fehlern behaftet. Um möglichst genaue Messungen durchführen zu können bzw. um die Genauigkeit durchgeführter Messungen einschätzen zu können, muss man die Ursachen für Messfehler, deren Größenordnung und ihre Auswirkungen auf die Genauigkeit des Ergebnisses untersuchen.

2.1.1 Stochastische Fehler:

Stochastische, oder zufällige Fehler werden hervorgerufen von messtechnisch nicht erfassbaren Änderungen des Systems. Bei wiederholten Messungen mit derselben Messanordnung und unter gleichen Bedingungen streuen die Fehler, zu beschreiben mit einer statistischen Verteilung. Zufällige Fehler entstehen im vorliegenden System hauptsächlich durch:

- Analoge Elektronik: Störsignale durch induktives Ladefeld oder externe Störsignale (Schaltregler, Lichtbögen, Langwellensender,...), Rauscheffekte

- Digitalisierung: Endliche Dynamik, Offset und Linearitätsfehler, Jitter bzw. Phasenrauschen
- Digitale Signalverarbeitung: Rundungsfehler,
- Endliche Reaktionszeiten

Die beschriebenen Fehler lassen sich durch statistische Verfahren charakterisieren und durch verschiedene Ansätze minimieren.

Dies ist nicht Teil der vorliegenden Arbeit und soll dadurch nicht detaillierter ausgeführt werden. Der Punkt dient lediglich der Vollständigkeit der Beschreibung auftretender Fehler und ermöglicht eine Abtrennung zu den im Folgenden beschriebenen systematischen Fehlern.

2.1.2 Systematische Fehler:

Systematische Messfehler treten bei unveränderten Messbedingungen stets mit dem gleichen Wert auf, sie sind objektiv bedingt durch die Unvollkommenheit der Messmittel (hier Komponenten des Messsystems). Im vorliegenden System treten systematische Fehler in erster Näherung durch folgende Einflüsse auf:

| Nr. | Einfluss | Auswirkung | Beispiel |
|---|---|---|---|
| 1. | Lineare Verzerrungen | Frequenzabhängige Amplituden- und Phasengänge, Gruppenlaufzeiten | Frequenzabhängige Übertragungsfunktion von Filter |
| 2. | Nichtlineare Verzerrungen | Amplitudenabhängige Übertragungsfunktionen, Intermodulationsprodukte, ... | Nichtlinearitäten von aktiven Komponenten wie Verstärker, Mischer,... |
| 3. | Signallaufzeiten | Konstante Gruppenlaufzeit | Übertragungsleitung |
| 4. | Bauteiltoleranzen | Variable Impedanzniveaus, Amplituden und Phasengänge, ... | Toleranzen von Kondensatoren, Widerständen,... |
| 5. | Temperaturdrifts, Alterung | Variable Impedanzniveaus, Amplituden und Phasengänge, ... | Temperaturabhängigkeit von Widerstände, Leitungen,... |

Diese Fehler sind im Allgemeinen unvermeidbar, jedoch unter bestimmten Voraussetzungen und Verfahren bestimm- und kontrollierbar. Nachfolgend die Beschreibung eines generischen Ansatzes zur Bestimmung und Korrektur systematischer Fehler in Messsystemen.

2.2 Herausforderung:

Das vorliegende FOD-System beruht auf der vektoriellen Messung von Reflektionsfaktoren an induktiven Sensorfeldern. Deren Beschreibung erfolgt gewöhnlich im Frequenzbereich durch eine diskrete Menge spektraler Komponenten $\Gamma_n(\omega_i)$, $i = \{1 \dots I\}$, welche durch Messung von Amplitude und Phase der hinlaufenden und reflektierten Wellengrößen, $a_{Sn}(\omega_i)$ und $b_{Sn}(\omega_i)$, errechnet werden können:

$$\Gamma_{Sn}(\omega_i) = \frac{b_{Sn}(\omega_i)}{a_{Sn}(\omega_i)}$$

Da der Reflektionsfaktor allgemein eine frequenzabhängige Größe ist, muss die Messung für jede Messfrequenz ($\omega_i$) und jedes Sensorfeld erfolgen. Im Folgenden wird die Frequenzabhängigkeit eines Parameters ($\omega_i$) aus Gründen der einfacheren Lesbarkeit nur noch durch $a(\omega_i) = a_i$ ausgedrückt. Da im vorliegenden System zwischen mehreren Sensorfeldern unterschieden werden muss, wird zusätzlich der Index $Sn$ verwendet, der die Zugehörigkeit zum $n$. Sensorfeld zum Ausdruck bringt. Ausgehend von der Kenntnis der Reflektionsfaktoren kann die weitere Signalverarbeitung erfolgen (z.B. Schätzung der elektrischen Sensoreigenschaften → Betrachtung dessen Änderungen → Fremdobjekterkennung).

Jedoch, wie in Figur 5 (in dem Signalflussplan FOD) dargestellt, ist in einem realen System ein direkter Zugriff auf die wahren Wellengrößen $a_{i,Sn}^D$, $b_{i,Sn}^D$ am Messobjekt (entspricht Device Under Test oder DUT) nicht möglich. Diese Größen werden durch die Auswerteschaltung verzerrt (vgl. 2.1.2). Zur weiteren Verarbeitung stehen "nur" die

verfälschten, gemessenen Größen $a_{i,Sn}^{M}$, $b_{i,Sn}^{M}$ zur Verfügung.

Weiter sind in Figur 5 eine digitale Verarbeitung(-seinrichtung) 35, eine analoge Verarbeitung(-seinrichtung) 38 und die Signalverteilung 33 als Elemente der Auswerteelektronik 30 dargestellt. Ferner ist eine an die Auswerteelektronik 40 angeordnete bzw. mit dieser elektrisch in Verbindung stehende Sensoreinrichtung 40 mit mehreren Einzelsensoreinrichtungen 43 bzw. 43_1, 43_2, 43_N dargestellt.

Unter der Annahme, dass die Messwerte für die Anwendung einer Fremdkörpererkennung unzulässig hoch verfälscht werden, besteht die Herausforderung nun darin, ein Verfahren zu entwickeln, um aus den gemessenen Größen die unbekannten wahren Größen am DUT zu bestimmen.

2.3. Lösungsansatz zur Korrektur systematischer Fehler:

Verfahren zur Korrektur von systematischen Messfehlern werden allgemein als Kalibrierung bezeichnet. Es handelt sich hierbei nicht um Schätzverfahren, die die Messwerte an einen wahren

Wert annähern, sondern um deterministische Verfahren. Auf Basis von Messungen von bekannten Messnormalen kann quantitativ Rückschluss auf die Art und Größe von systematischen Fehlern gezogen und diese korrigiert werden.

Aus 2.2 geht hervor, das man ohne eine Kalibriereinrichtung nur Zugriff auf die gemessenen Größen $a_{i,Sn}^{M}$, $b_{i,Sn}^{M}$ hat, also bei der Referenzebene 39 Mess (vgl. Abbildung 5) gemessen wird. Durch eine geeignetes Fehlermodell, das die gemessenen Größen durch eine deterministisches Vorgehen auf die wahren Größen abbildet, wäre es möglich die Bezugsebene von der Referenzebene 39 Mess auf die Referenzebene 45 DUT zu verschieben.

$$\{a_{i,Sn}^{D}, b_{i,Sn}^{D}\} = f\{a_{i,Sn}^{M}, b_{i,Sn}^{M}\}$$

Dies ist gleichbedeutend mit der Korrektur systematischer Fehler zwischen beiden Ebenen. Die Entwicklung einer Kalibrierung im vorliegenden System bedingt folgende Schritte:

- Entwicklung eines geeigneten Fehlermodells das folgende Kriterien erfüllt:

  ◦ physikalische Eigenschaften des Systems werden ausreichend präzise modelliert
  ◦ Prüfung auf Gültigkeit in den definierten Grenzen
  ◦ niedrige Komplexität → Möglichkeit für Lösung in einem Echtzeitsystem

- Entwicklung einer Methode um die Parameter des Fehlermodells zu bestimmen

Für dieses FOD-System wurde ein Fehlermodell, sowie eine Kalibriermethode entwickelt, die anschließend detailliert erläutert werden soll.

3. Beschreibung der Erfindung "Systemkalibrierung eines FOD-Systems":

Wie oben beschrieben, verursachen alle Hardwarekomponenten des Messsystems beträchtliche Verzerrungen. Um exakte und hochauflösende Messungen durchführen zu können, müssen die systematischen Messfehler eliminiert werden. Das kann mit einer passenden Kalibrierung erreicht werden. Diese Kalibrierung muss für jede Messfrequenz und jedes Sensorfeld erfolgen und besteht aus mehreren Schritten, welche in den folgenden Abschnitten näher erklärt werden.

3.1. Grundlagen - Definition eines linearen Fehlermodells:

Es wurde ein lineares Fehlermodell entwickelt, das die gemessenen Größen durch komplexwertige Fehlerkoeffizienten durch eine lineare Gleichung auf die wahren Größen abbildet. Systematische Fehler aus 1,3,4,5, beschrieben in 2.1.2 können dadurch korrigiert werden. Die grundsätzliche Annahme dieses Modells beruht darauf, dass das System selbst als linear gesehen werden kann.

Annahme 3-1: Das Messsystem selbst ist linear. (Vernachlässigung von nichtlinearen Verzerrungen, 2. aus Abschnitt 2.1.2.)

EP 3 556 600 A1

Ist diese Annahme im Rahmen der Messgenauigkeit gültig, existiert eine lineare Beziehung zwischen den gemessenen spektralen Rohdaten und den spektralen Komponenten am DUT.

3.1.1 Fehlermodell:

Allgemein kann die oben beschriebene Beziehung durch folgende Gleichung abgebildet werden, wodurch es möglich ist, die 2 gemessenen Größen auf die 2 wahren Größen abzubilden:

$$\begin{pmatrix} a_{i,Sn}^D \\ b_{i,Sn}^D \end{pmatrix} \triangleq \begin{pmatrix} a \\ b \end{pmatrix}_{i,Sn}^D = \begin{pmatrix} \tilde{\alpha} & \tilde{\beta} \\ \tilde{\gamma} & \tilde{\delta} \end{pmatrix}_{i,Sn} \begin{pmatrix} a \\ b \end{pmatrix}_{i,Sn}^M$$

| | |
|---|---|
| $a, b$ | hin- bzw. rücklaufende normierte Wellengröße |
| $\tilde{\alpha}, \tilde{\beta}, \tilde{\gamma}, \tilde{\delta}$ | Fehlerkoeffizienten |
| $D$ | unbekannte wahre Größe am DUT, bzw. Testobjekt |
| $M$ | bekannte fehlerbehaftete Messgröße |
| $i$ | Index Messfrequenz $\omega_i$, $i=\{1,2,...,I\}$ |
| $I$ | Anzahl Messfrequenzen |
| $Sn$ | Sensorfeld $n=\{1,2,...,N\}$ |
| $N$ | Anzahl Sensorfelder |

Die fehlerbehaftete Auswerteelektronik zwischen digitaler Verarbeitung und Sensorfeld wird dabei als Transmissionsmatrix modelliert. Aufgrund der Linearitätsanforderung kann eine hin- oder rücklaufende spektrale Komponente einer Wellengröße am DUT linear durch komplexwertige Fehlerkoeffizienten mit den gemessenen Größen verknüpft werden. Durch die vier Fehlerkoeffizienten wäre nun möglich, die wahren Wellengrößen (*a* und *b* einzeln) am DUT zu bestimmen. Ausklammern des Faktors $\tilde{\alpha}$ führt zu

$$\begin{pmatrix} a \\ b \end{pmatrix}_{i,Sn}^D = \tilde{\alpha}_{i,Sn} \begin{pmatrix} 1 & \beta \\ \gamma & \delta \end{pmatrix}_{i,Sn} \begin{pmatrix} a \\ b \end{pmatrix}_{i,Sn}^M, \text{ mit } \beta = \frac{\tilde{\beta}}{\tilde{\alpha}}, \gamma = \frac{\tilde{\gamma}}{\tilde{\alpha}}, \delta = \frac{\tilde{\delta}}{\tilde{\alpha}},$$

Obige Form enthält die sogenannten "relativen Fehlerkoeffizienten" $\beta, \gamma, \delta$, deren Bestimmung durch relative Messungen erfolgen kann, im Folgenden als relative Kalibrierung bezeichnet. Die Bestimmung der relativen Fehlerkoeffizienten bildet den Kern dieser Arbeit und wird in den nächsten Punkten ausführlich behandelt. $\tilde{\alpha}$ kann als "absolute Fehlerkoeffizient" bezeichnet werden. Ausgehend von obiger Gleichung kann nun der Reflektionsfaktor am DUT berechnet werden, was zu

$$\Gamma_{i,Sn}^D = \frac{b_{i,Sn}^D}{a_{i,Sn}^D} = \frac{\tilde{\alpha}_{i,Sn}}{\tilde{\alpha}_{i,Sn}} \cdot \frac{\gamma_{i,Sn} a_{i,Sn}^M + \delta_{i,Sn} b_{i,Sn}^M}{a_{i,Sn}^M + \beta_{i,Sn} b_{i,Sn}^M} = \frac{\gamma_{i,Sn} a_{i,Sn}^M + \delta_{i,Sn} b_{i,Sn}^M}{a_{i,Sn}^M + \beta_{i,Sn} b_{i,Sn}^M}$$

führt. Hierdurch wird ersichtlich, dass es für die Berechnung des Reflektionskoeffizienten ausreichend ist, die relativen Fehlerkoeffizienten $\beta, \gamma, \delta$ zu bestimmen. Mit den drei verbleibenden Koeffizienten kann das Modell als 3-Term-Fehlermodell bezeichnet und auf folgende Darstellung vereinfacht werden:

$$\begin{pmatrix} a \\ b \end{pmatrix}_{i,Sn}^D = \begin{pmatrix} 1 & \beta \\ \gamma & \delta \end{pmatrix}_{i,Sn} \begin{pmatrix} a \\ b \end{pmatrix}_{i,Sn}^M$$

Die Herausforderung besteht nun darin, die Fehlerkoeffizienten $\beta, \gamma, \delta$ der relativen Fehlermatrix für jedes Sensorfeld und jede Messfrequenz zu jedem Zeitpunkt präzise zu bestimmen.

3.1.2 Bestimmung der "relativen Fehlerkoeffizienten":

Die relative Kalibrierung des FOD-Systems ist ähnlich einer klassischen Kalibrierung eines vektoriellen Netzwerkanalysators (z.B. SOLT). Die drei Fehlerkoeffizienten können durch Vermessung von wenigstens drei bekannten

17

Testobjekten (anstelle der induktiven Sensoreinheit) bestimmt werden.

Gewöhnlich werden hierfür ein Kurzschluss ($\Gamma_{short}$ = -1), ein Leerlauf (= Open, $\Gamma_{Open}$=1) und ein Widerstand, der der Bezugsimpedanz des Systems entspricht, also Anpassung (= Load, gewöhnlich 50 Ohm, $\Gamma_{Load}$=0) verwendet. In dieser Arbeit wurde eine derartige Kalibrierung mit den Elementen Short, Open, Load implementiert.

Da dies aber nur einen Spezialfall darstellt, sollen im Folgenden die allgemeinen Begriffe "Kalibrierelement A, B und C" mit den bekannten Reflektionsfaktoren $\Gamma_{KalA}$, $\Gamma_{KalB}$, $\Gamma_{KalC}$ verwendet werden. Vermessung dieser bekannter Kalibrierelemente ergibt

$$\Gamma_{i,A} = \left(\frac{b^D_{i,Sn}}{a^D_{i,Sn}}\right)_{KalA} = \left(\frac{\gamma_{i,Sn} a^M_{i,Sn} + \delta_{i,Sn} b^M_{i,Sn}}{a^M_{i,Sn} + \beta_{i,Sn} b^M_{i,Sn}}\right)_{KalA}$$

$$\Gamma_{i,B} = \left(\frac{b^D_{i,Sn}}{a^D_{i,Sn}}\right)_{KalB} = \left(\frac{\gamma_{i,Sn} a^M_{i,Sn} + \delta_{i,Sn} b^M_{i,Sn}}{a^M_{i,Sn} + \beta_{i,Sn} b^M_{i,Sn}}\right)_{KalB}$$

$$\Gamma_{i,C} = \left(\frac{b^D_{i,Sn}}{a^D_{i,Sn}}\right)_{KalC} = \left(\frac{\gamma_{i,Sn} a^M_{i,Sn} + \delta_{i,Sn} b^M_{i,Sn}}{a^M_{i,Sn} + \beta_{i,Sn} b^M_{i,Sn}}\right)_{KalC}$$

wobei die unbekannten hin- und rücklaufenden Komponenten am DUT durch die entsprechenden gemessenen Werten ersetzt wurden. Unter der Voraussetzung unterschiedlicher Kalibrierelemente ergibt sich ein linear unabhängiges Gleichungssystem, das nach den drei unbekannten Fehlerkoeffizienten $\beta_{i,Sn}$, $\gamma_{i,Sn}$, $\delta_{i,Sn}$ für jede Messfrequenz und jedes Sensorfeld durch

$$\begin{pmatrix} \beta_{i,Sn} \\ \gamma_{i,Sn} \\ \delta_{i,Sn} \end{pmatrix} = \begin{pmatrix} -\Gamma_{i,A}\left(\frac{b_{i,Sn}}{a_{i,Sn}}\right)^M_{KalA} & 1 & \left(\frac{b_{i,Sn}}{a_{i,Sn}}\right)^M_{KalA} \\ -\Gamma_{i,B}\left(\frac{b_{i,Sn}}{a_{i,Sn}}\right)^M_{KalB} & 1 & \left(\frac{b_{i,Sn}}{a_{i,Sn}}\right)^M_{KalB} \\ -\Gamma_{i,C}\left(\frac{b_{i,Sn}}{a_{i,Sn}}\right)^M_{KalC} & 1 & \left(\frac{b_{i,Sn}}{a_{i,Sn}}\right)^M_{KalC} \end{pmatrix}^{-1} \begin{pmatrix} \Gamma_{i,A} \\ \Gamma_{i,B} \\ \Gamma_{i,C} \end{pmatrix}$$

gelöst werden kann. Wenn die relative Kalibrierung abgeschlossen ist, kann jeder Fehlerkoeffizient bestimmt werden. Der Reflektionsfaktor am DUT kann auf Basis der gemessenen Rohwerte und den Koeffizienten wie folgt berechnet werden:

$$\Gamma^D_{i,Sn} = \frac{\gamma_{i,Sn} a^M_{i,Sn} + \delta_{i,Sn} b^M_{i,Sn}}{a^M_{i,Sn} + \beta_{i,Sn} b^M_{i,Sn}}$$

Die Indizes *i*, die die Frequenzabhängigkeit von der Messfrequenz $\omega_i$ ausdrücken werden im Folgenden aus Gründen der besseren Lesbarkeit ausgelassen. Aufbauend auf diesem Punkt sollen jedoch alle weiteren Größen ohne Einschränkung als frequenzabhängig betrachtet werden.

3.2 Kalibrierung eines FOD-Systems:

Wie oben gezeigt, ist es für die Kalibrierung erforderlich, Elemente mit bekanntem Reflektionsfaktor zu vermessen. Die Herausforderung besteht nun darin, das Verfahren im Umfeld der Fremdkörpererkennung in einem induktiven Ladesystem anzuwenden.

Im Vergleich zu Messsystemen im Laborumfeld ist es dem Anwender hier nicht möglich oder zumutbar, das System vor jedem Gebrauch vollständig manuell neu zu kalibrieren. Es erscheint jedoch realistisch, ein manuelles Verfahren anzuwenden, bei dem das System einmalig in einen Zustand der Grundkalibrierung versetzt werden kann. Systemänderungen nach der Kalibrierung (Temperatur, Alterung,...) verfälschen die Messung, bzw. machen die Kalibrierung jedoch ungültig. Um Fehldetektionen oder im schlimmsten Fall Nichtdetektion von Objekten zu verhindern, müssen diese Systemänderungen kompensiert werden.

Figur 6 zeigt einen Signalflussplan FOD mit Kalibriereinheiten.

3.2.1 Vorgehen

Bei Systemänderungen ändern sich auch die Übertragungseigenschaften zwischen den Signalpfaden (siehe Ellipse E2 in Figur 6) und der digitalen Verarbeitung 35. Alle Signale durchlaufen die gleiche Hardware für die analoge Verarbeitung 38, sie erfahren in dieser Komponente also die gleiche Verzerrung. Weiterhin werden zur Signalverteilung 33 Multiplexer gleicher Bauart verwendet wodurch folgende Annahmen als Grundlage für die weitere Betrachtung getroffen werden können:

- Annahme 3-2: Übertragungseigenschaften für verschiedene Signalpfade ähnlich, jedoch allgemein unterschiedlich → Grundkalibrierung für jeden Signalpfad getrennt notwendig
- Annahme 3-3: Relative Änderung der Übertragungseigenschaften bei Systemänderungen gleich für alle Signalpfade (im Rahmen der Messgenauigkeit) → Möglichkeit, alle Signalpfade im späteren Betrieb gemeinsam nach zu kalibrieren.

Aufgrund dieser Annahmen wurde ein mehrstufiges Kalibrierverfahren entwickelt, das sich aus folgenden Stufen zusammensetzt:

1. Grundkalibrierung bei der Inbetriebnahme (EOL):

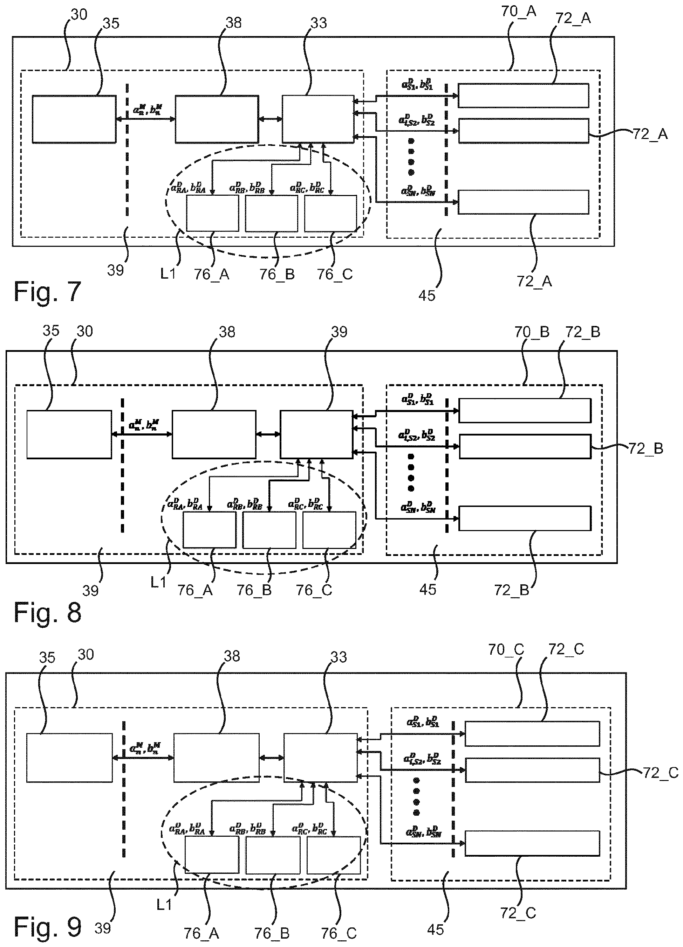

- Anstelle der Sensoreinheit 40 sind wenigstens 3 Kalibriereinheiten 70 vorhanden, die anstelle der N Sensorfelder 43_1, 43_2 ...,43_N) N gleiche Kalibrierelemente 72 enthalten (vgl. "Kalibriereinheit 70 A/B/C" in Figur 6 bzw. die drei verschiedenen Kalibriereinheiten A, B, C mit Bezugszeichen 70_A, 70_B und 70_C in den Figuren 7-9).
- Die Kalibriereinheiten A, B, C mit Bezugszeichen 70_A, 70_B, 70_C werden nacheinander über eine Steckverbindung an der Auswerteelektronik 30 angebracht und vermessen.
- Möglichkeit zur Berechnung von Fehlerkoeffizienten für die Messpfade bei der Inbetriebnahme.
- Ergebnis: Gültige Kalibrierung nur zum Zeitpunkt der Inbetriebnahme durch Berechnung von Fehlerkoeffizienten für jedes Sensorfeld 43 und jede Messfrequenz. Korrektur von systematischen Fehlern 1, 3, 4, aus Abschnitt 2.1.2.

2. Kalibrierung zur Laufzeit:

- Auf der Auswerteeinheit 30 befinden sich Referenzpfade (in Fig. 6 markiert durch die Ellipse E1), die wenigstens 3 verschiedene, bekannte und stabile Kalibriernormale (gegeben beispielsweise durch drei verschiedene Kalibrierelemente 76) enthalten.
- Es besteht die Möglichkeit, diese Kalibriernormale einmalig bei der Grundkalibrierung und zyklisch zur Laufzeit zu vermessen.
- Möglichkeit zur Berechnung von Fehlerkoeffizienten für die Referenzpfad (in Fig. 6 markiert durch die Ellipse E1) und die Messpfade (in Fig. 6 markiert durch die Ellipse E2) bei der Inbetriebnahme UND zur Laufzeit.
- Ergebnis: Nachreferenzierung der Fehlerkoeffizienten der Sensorfelder im laufenden Betrieb. Korrektur von systematischen Fehlern 1, 3, 4, 5, aus Abschnitt 2.1.2.

In Fig. 6 kennzeichnet das Bezugszeichen 74 die bevorzugt fest an der Auswerteelektronik 30 angeordnete zweite Kalibriereinrichtung aufweisend wenigstens ein Kalibrierelement 76 und bevorzugt drei verschiedene Kalibrierelemente 76_A, 76_B, 76C.

Das Bezugszeichen 70 kennzeichnet allgemein die erste Kalibriereinrichtung, welche wiederum drei (separaten) Kalibriereinheiten 70_A, 70_B und 70_C (siehe Figuren 7-9) aufweisen kann. Bevorzugt weist jede dieser Kalibriereinheiten mehrere und bevorzugt N insbesondere identische bzw. baugleiche Kalibrierelemente 72_A bzw. 72_B bzw. 72_C auf.

3.2.2 Erweiterung Fehlermodell:

Aus dem beschriebenen Vorgehen in 3.2.1 kann das Fehlermodell aus 3.1.1 erweitert und auf das vorliegende FOD System angepasst werden. Es existieren nun neben Fehlerkoeffizienten für jedes Sensorfeld auch Fehlerkoeffizienten für den Referenzpfad. Diese werden nun nicht mehr als konstant, sondern als variabel betrachtet. Folgende Tabelle fasst alle Fehlermatrizen zum Zeitpunkt der Grundkalibrierung, sowie zum Zeitpunkt der Messung, also zur Laufzeit zusammen:

| Fehlermatrix | Grundkalibrierung | Messung (zur Laufzeit) |
|---|---|---|
| Sensorfelder | $\begin{pmatrix} 1 & \beta_G \\ \gamma_G & \delta_G \end{pmatrix}_{Sn}$ <br><br> *Fehlerkoeffizienten für Sensorfeld Sn und Messfrequenz $\omega_i$ zum Zeitpunkt der Grundkalibrierung* | $\begin{pmatrix} 1 & \beta_L \\ \gamma_L & \delta_L \end{pmatrix}_{Sn} = \begin{pmatrix} 1 & \beta_G \cdot \Delta\beta \\ \gamma_G \cdot \Delta\gamma & \delta_G \cdot \Delta\delta \end{pmatrix}_{Sn}$ <br><br> *Fehlerkoeffizienten für Sensorfeld Sn und Messfrequenz $\omega_i$ zum Zeitpunkt der Messung* |
| Referenzpfad | $\begin{pmatrix} 1 & \beta_G \\ \gamma_G & \delta_G \end{pmatrix}_{Ref}$ <br><br> *Fehlerkoeffizienten für den Referenzpfad R und Messfrequenz $\omega_i$ zum Zeitpunkt der Grundkalibrierung* | $\begin{pmatrix} 1 & \beta_L \\ \gamma_L & \delta_L \end{pmatrix}_{Ref} = \begin{pmatrix} 1 & \beta_G \cdot \Delta\beta \\ \gamma_G \cdot \Delta\gamma & \delta_G \cdot \Delta\delta \end{pmatrix}_{Ref}$ <br><br> *Fehlerkoeffizienten für den Referenzpfad R und Messfrequenz $\omega_i$ zum Zeitpunkt der Messung* |

Indizes G/M kennzeichnen dabei gültige Werte bei der Grundkalibrierung, bzw. der späteren Messung, also zur Laufzeit. Durch eine Grundkalibrierung und eine Kalibrierung zur Laufzeit können die Koeffizienten $\{\beta_{G,Sn}, \gamma_{G,sn}, \delta_{G,Sn}\}$, $\{\beta_{G,Ref}, \gamma_{G,Ref}, \delta_{G,Ref}\}$ sowie $\{\beta_{L,Ref}, \gamma_{L,Ref}, \delta_{L,Ref}\}$ bestimmt werden. Die Fehlerkoeffizienten der Sensorfelder zum Zeitpunkt der Messung $\{\beta_{L,Sn}, \gamma_{L,Sn}, \delta_{L,Sn}\}$ sind zwar für die spätere Berechnung der Reflektionsfaktoren notwendig, jedoch vorerst unbekannt. Konkret muss eine Möglichkeit gefunden werden, die relativen Änderungen $\{\Delta\beta_{Sn}, \Delta\gamma_{Sn}, \Delta\delta_{Sn}\}$ zu berechnen. Mit Annahme 3-3 lässt sich folgender Zusammenhang, beispielhaft an $\beta$ gezeigt, zu den bekannten Größen herstellen:

$$\beta_{L,Sn} = \beta_{G,Sn} \cdot \Delta\beta_{Sn} = \beta_{G,Sn} \cdot \Delta\beta_{Ref} = \beta_{G,Sn} \cdot \frac{\beta_{L,Ref}}{\beta_{G,Ref}}$$

Obige Gleichung zeigt, dass die unbekannte Größe $\beta_{M,Sn}$ durch 3 bekannte Größen bestimmt werden kann. Äquivalent dazu lassen sich die beiden übrigen Koeffizienten berechnen:

$$\beta_{L,Sn} = \beta_{G,Sn} \cdot \frac{\beta_{L,Ref}}{\beta_{G,Ref}}, \quad \gamma_{L,Sn} = \gamma_{G,Sn} \cdot \frac{\gamma_{L,Ref}}{\gamma_{G,Ref}}, \quad \delta_{M,Sn} = \delta_{G,Sn} \cdot \frac{\delta_{L,Ref}}{\delta_{G,Ref}}$$

Folglich ist es mit dem oben beschriebenen Vorgehen und dem erweiterten Fehlermodell möglich, die die Fehlerkoeffizienten $\beta$, $\gamma$, der relativen Fehlermatrix für jedes Sensorfeld und jede Messfrequenz zu jedem Zeitpunkt präzise zu bestimmen. Ein exemplarischer Kalibrier- und Messablauf bestehend aus Grundkalibrierung und Kalibrierung zur Laufzeit wird in den folgenden Punkten vorgestellt.

3.2.3 Grundkalibrierung:

Die Grundkalibrierung erfolgt zum Beispiel bei der ersten Inbetriebnahme des Systems und kann auf 6 einzelne Schritte aufgeteilt werden. In den ersten drei Schritten werden bevorzugt die genannten Kalibriereinheiten A, B, C mit Bezugszeichen 70_A, 70_B und 70_C in den Figuren manuell anstelle der Sensoreinheit 40 mit dem System verbunden:

1. Verbinden von Kalibriereinheit A (Bezugszeichen 70_A) mit der Auswerteelektronik (Figur 7): Anstatt der Sensorfelder 43_1, 43_2, ..., 43_N wird jeweils das Kalibrierelement 72_A gemessen. Insgesamt N Messungen für N Sensorfelder 43. Für jedes Sensorfeld und jede Messfrequenz erhält man das Verhältnis

$$\left(\frac{b_{G,Sn}}{a_{G,Sn}}\right)^M_{KalA}, \qquad Sn = \{S1, S2, \dots, SN\}$$

In Figur 7 ist die Grundkalibrierung mit einer Messung an der Kalibriereinheit 70_A an (an der Position der bzw. anstelle der) Sensorfelder (43_1, 43_2, ...,43_N) dargestellt.

2. Verbinden von Kalibriereinheit B (mit Bezugszeichen 70_B) mit der Auswerteelektronik 30 (siehe Figur 8)

Anstatt der Sensorfelder (43_1, 43_2, ...,43_N) wird jeweils das Kalibrierelement B (Bezugszeichen 72_B) gemessen. Insgesamt N Messungen für N Sensorfelder. Für jedes Sensorfeld und jede Messfrequenz erhält man das Verhältnis

$$\left(\frac{b_{G,Sn}}{a_{G,Sn}}\right)^M_{KalB}, \qquad Sn = \{S1, S2, \dots, SN\}$$

In Figur 8 ist die Grundkalibrierung mit einer Messung an der Kalibriereinheit B (mit Bezugszeichen 70_B) an (an der Position der bzw. anstelle der) Sensorfelder (43_1, 43_2, ...,43_N) dargestellt.

3. Verbinden von Kalibriereinheit C (mit Bezugszeichen 70_C) mit der Auswerteelektronik 30 (siehe Figur 9):
Anstatt der Sensorfelder (43_1, 43_2, ...,43_N) wird jeweils das Kalibrierelement C (mit Bezugszeichen 72_C in den Figuren) gemessen. Insgesamt N Messungen für N Sensorfelder. Für jedes Sensorfeld und jede Messfrequenz erhält man das Verhältnis

$$\left(\frac{b_{G,Sn}}{a_{G,Sn}}\right)^M_{KalC}, \qquad Sn = \{S1, S2, \dots, SN\}$$

In Figur 9 ist die Grundkalibrierung mit einer Messung an der Kalibriereinheit C (mit Bezugszeichen 70_C) an (an der Position der bzw. anstelle der) Sensorfelder (43_1, 43_2, ...,43_N) dargestellt.

Durch die aufgenommenen Werte kann nun die Berechnung der Fehlerkoeffizienten für jedes Sensorfeld $Sn$ und jede Messfrequenz $\omega_i$ zum Zeitpunkt der Grundkalibrierung durch folgende Gleichung erfolgen:

$$\begin{pmatrix} \beta_{G,Sn} \\ \gamma_{G,Sn} \\ \delta_{G,Sn} \end{pmatrix} = \begin{pmatrix} -\Gamma_{i,A}\left(\frac{b_{G,Sn}}{a_{G,Sn}}\right)^M_{KalA} & 1 & \left(\frac{b_{G,Sn}}{a_{G,Sn}}\right)^M_{KalA} \\ -\Gamma_{i,B}\left(\frac{b_{G,Sn}}{a_{G,Sn}}\right)^M_{KalB} & 1 & \left(\frac{b_{G,Sn}}{a_{G,Sn}}\right)^M_{KalB} \\ -\Gamma_{i,C}\left(\frac{b_{G,Sn}}{a_{G,Sn}}\right)^M_{KalC} & 1 & \left(\frac{b_{G,Sn}}{a_{G,Sn}}\right)^M_{KalC} \end{pmatrix}^{-1} \begin{pmatrix} \Gamma_{i,A} \\ \Gamma_{i,B} \\ \Gamma_{i,C} \end{pmatrix}, \qquad Sn = \{S1, S2, \dots, SN\},$$

Im nächsten Schritt werden die 3 Kalibrierelemente auf der Auswerteplatine vermessen.

4. Vermessen der Kalibriereinheiten bzw. der zweiten Kalibriereinrichtung 74 (in Fig. 10 illustriert durch Nicht-Kennzeichnung mit Ellipse L1) auf der Auswerteelektronik 30 (siehe Figur 10):
Kalibrierelemente A, B, C (siehe Bezugszeichen 72_A, Kalibrierelement 72_B und Kalibrierelement 72_C in den Figuren), die sich auf der Auswerteplatine an dem Referenzpfad befinden, werden nacheinander vermessen. Insgesamt drei Messvorgänge. Für jede Messfrequenz erhält man die Verhältnisse

$$\left(\frac{b_{G,Ref}}{a_{G,Ref}}\right)^M_{KalA}, \qquad \left(\frac{b_{G,Ref}}{a_{G,Ref}}\right)^M_{KalB}, \qquad \left(\frac{b_{G,Ref}}{a_{G,Ref}}\right)^M_{KalC}$$

Figur 10 zeigt eine Grundkalibrierung mit Messung der Kalibrierelemente A, B und C (siehe Bezugszeichen 72_A, 72_B und 72_C) bzw. der zweiten Kalibriereinrichtung 74 an Referenzpfad (illustriert durch Ellipse E1).

Durch die aufgenommenen Werte kann nun die Berechnung der Fehlerkoeffizienten für den Referenzpfad und jede Messfrequenz ωi zum Zeitpunkt der Grundkalibrierung durch folgende Gleichung erfolgen:

$$
\begin{pmatrix} \beta_{G,Ref} \\ \gamma_{G,Ref} \\ \delta_{G,Ref} \end{pmatrix} = \begin{pmatrix} -\Gamma_{i,A}\left(\frac{b_{G,Ref}}{a_{G,Ref}}\right)^M_{KalA} & 1 & \left(\frac{b_{G,Ref}}{a_{G,Ref}}\right)^M_{KalA} \\ -\Gamma_{i,B}\left(\frac{b_{G,Ref}}{a_{G,Ref}}\right)^M_{KalB} & 1 & \left(\frac{b_{G,Ref}}{a_{G,Ref}}\right)^M_{KalB} \\ -\Gamma_{i,C}\left(\frac{b_{G,Ref}}{a_{G,Ref}}\right)^M_{KalC} & 1 & \left(\frac{b_{G,Ref}}{a_{G,Ref}}\right)^M_{KalC} \end{pmatrix}^{-1} \begin{pmatrix} \Gamma_{i,A} \\ \Gamma_{i,B} \\ \Gamma_{i,C} \end{pmatrix}, \quad Sn = \{S1, S2, \dots, SN\}
$$

Durch das oben beschriebene Vorgehen ist es also möglich, alle Fehlerkoeffizienten zum Zeitpunkt der Grundkalibrierung zu bestimmen.

3.2.4 Kalibrierung/Messung zur Laufzeit:

Im laufenden Betrieb werden in erster Linie die Sensorfelder 1 bis N periodisch vermessen. Dieser Messvorgang wird nun durch einfügen von Kalibriervorgängen erweitert. Da anzunehmen ist, dass Systemänderungen nur langsam stattfinden (konstant über einige Sekunden), ist es allgemein nicht notwendig, nach jedem Messvorgang einen Kalibriervorgang auszuführen. Auf eine Anzahl von M Messvorgängen kann jeweils 1 Kalibriervorgang erfolgen.

Die Kalibriervorgänge zur Laufzeit erfolgen wie in 3.2.3 durch das Vermessen von Kalibrierelement A (Bezugszeichen 72_A), Kalibrierelement B (Bezugszeichen 72_B) und Kalibrierelement C (Bezugszeichen 72_C), die sich auf der Auswerteplatine an dem Referenzpfad befinden. Insgesamt jeweils drei Messvorgänge. Für jede Messfrequenz erhält man

$$
\left(\frac{b_{L,Ref}}{a_{L,Ref}}\right)^M_{KalA}, \qquad \left(\frac{b_{L,Ref}}{a_{L,Ref}}\right)^M_{KalB}, \qquad \left(\frac{b_{L,Ref}}{a_{L,Ref}}\right)^M_{KalC}
$$

Figur 11 zeigt eine Kalibrierung zur Laufzeit, Messung der Kalibrierelemente A, B und C (siehe Bezugszeichen 72_A, 72_B und 72_C) (der zweiten Kalibriereinrichtung) an Referenzpfad.

Durch die zur Laufzeit aufgenommenen Referenzwerte kann nun die Berechnung der Fehlerkoeffizienten für den Referenzpfad und jede Messfrequenz $\omega_i$ zum Zeitpunkt der Messung durch

$$
\begin{pmatrix} \beta_{L,Ref} \\ \gamma_{L,Ref} \\ \delta_{L,Ref} \end{pmatrix} = \begin{pmatrix} -\Gamma_{i,A}\left(\frac{b_{L,Ref}}{a_{L,Ref}}\right)^M_{KalA} & 1 & \left(\frac{b_{L,Ref}}{a_{L,Ref}}\right)^M_{KalA} \\ -\Gamma_{i,B}\left(\frac{b_{L,Ref}}{a_{L,Ref}}\right)^M_{KalB} & 1 & \left(\frac{b_{L,Ref}}{a_{L,Ref}}\right)^M_{KalB} \\ -\Gamma_{i,C}\left(\frac{b_{L,Ref}}{a_{L,Ref}}\right)^M_{KalC} & 1 & \left(\frac{b_{L,Ref}}{a_{L,Ref}}\right)^M_{KalC} \end{pmatrix}^{-1} \begin{pmatrix} \Gamma_{i,A} \\ \Gamma_{i,B} \\ \Gamma_{i,C} \end{pmatrix}, \quad Sn = \{S1, S2, \dots, SN\}
$$

erfolgen. Durch obige und in 3.2.3 durchgeführte Messungen ist es nun möglich die Fehlerkoeffizienten für die Sensorfelder zur Laufzeit zyklisch durch folgende Gleichungen zu aktualisieren.

$$
\beta_{L,Sn} = \beta_{G,Sn} \cdot \frac{\beta_{L,Ref}}{\beta_{G,Ref}}, \quad \gamma_{L,Sn} = \gamma_{G,Sn} \cdot \frac{\gamma_{L,Ref}}{\gamma_{G,Ref}}, \qquad \delta_{L,Sn} = \delta_{G,Sn} \cdot \frac{\delta_{L,Ref}}{\delta_{G,Ref}}
$$

Figur 12 illustriert einen Messvorgang von Sensoreinheit 40 bzw. Sensoreinrichtung 40. Im darauffolgenden Messvorgang, bei dem das Sensorfeld 43_1 bis Sensorfeld 43_N nacheinander vermessen werden (vgl. Figur 12), können nun die fehlerbehafteten gemessenen Rohwerte $a_n^M, b_n^M$ auf die wahren Wellengrößen $a_{Sn}^D, b_{Sn}^D$ abgebildet werden:

$$\begin{pmatrix} a \\ b \end{pmatrix}_{Sn}^D = \begin{pmatrix} 1 & \beta \\ \gamma & \delta \end{pmatrix}_{L,Sn} \begin{pmatrix} a \\ b \end{pmatrix}_{Sn}^M$$

Ferner ist es möglich, den wahren Reflektionsfaktor am DUT direkt zu berechnen:

$$\Gamma_{Sn}^D = \frac{\gamma_{L,Sn} a_{L,Sn}^M + \delta_{L,Sn} b_{Sn}^M}{a_{Sn}^M + \beta_{L,Sn} b_{Sn}^M}$$

Bei Gültigkeit obiger Annahmen und Durchführung der vorgestellten Kalibrierung ist es also möglich, systematische Fehler, auch bei Systemänderungen zur Laufzeit, zu korrigieren. Alle Fehler aus 2.1.2 können somit vernachlässigt werden.

Zusammenfassend wurde ein Verfahren zur Kalibrierung eines FOD-Systems. Es wurde gezeigt, dass es bei Gültigkeit bestimmter Annahmen möglich ist, systematische Fehler, verursacht durch die Hardware der Auswerteelektronik, zu korrigieren. Dazu war es vorteilhaft notwendig, das System in einem geeigneten Fehlermodel abzubilden. Hier wurde bevorzugt eine lineare Abbildung der fehlerbehafteten gemessenen Wellengrößen auf die wahren Wellengrößen am DUT entwickelt. Dadurch ist es vorteilhaft möglich, alle linearen Verzerrungseffekte durch Fehlerkoeffizienten zu modellieren.

Bei dem Kalibrierverfahren wurde zudem ein Vorgehen entwickelt, das Fremdobjekterkennungssystem sogar unter Änderungen der Auswerteschaltung in einem kalibrierten Zustand zu halten. Dieses Verfahren besteht bevorzugt aus einem zweistufigen Ansatz, aufweisend und insbesondere bestehend aus einer einmaligen Grundkalibrierung und einer insbesondere zyklisch ausgeführten Kalibrierung zur Laufzeit. Bei der Grundkalibrierung werden bevorzugt anstelle der Sensoreinheit wenigstens drei verschiedene, bekannte Kalibriereinheiten mit der Auswerteeinheit verbunden und vermessen. Zur Laufzeit werden wiederum bevorzugt wenigstens drei verschiedene, bekannte Elemente, die sich auf der Auswerteeinheit selbst befinden, zyklisch vermessen.

Es wurde folglich sowohl eine Algorithmik, als auch eine Methodik entwickelt, die durch eine Korrektur der systematischen Messfehler eine deutliche Steigerung der Präzision von Messungen in einem FOD-System erlaubt. Dies resultiert in der Verbesserung der Möglichkeiten zur Detektion von Fremdobjekten, bzw. einer Minimierung von Fehlauslösungen im laufenden Betrieb.

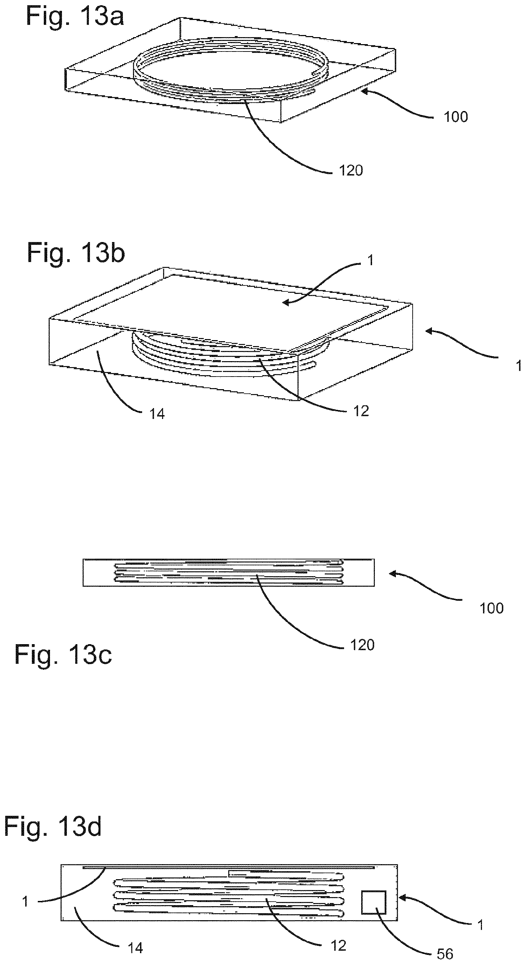

Die Figuren 13a und 13b zeigen zwei Ansichten einer möglichen Einbausituation. Dabei bezieht sich das Bezugszeichen 1 auf die gesamte Ladeeinheit bzw. Ladeanordnung (bzw. das Primärmodul). Diese weist ein Gehäuse 14 auf, in dem eine Primärspule 12, die auch als Ladespule dient, angeordnet ist. Das Bezugszeichen 100 kennzeichnet das Sekundärteil, welches eine Sekundärspule 120 aufweist. Dieses Sekundärteil kann dabei z.B. Bestandteil eines KFZ sein. Bei der in den Figuren 13a und 13b gezeigten Darstellungen ist auch die Erfassungseinrichtung 20 dargestellt. Diese ist hier oberhalb der Primärspule 12 angeordnet und damit bevorzugt zwischen der Primärspule 12 und der weiteren Spule 120 bzw. dem Sekundärmodul 100 das zur Ladung der aufzuladenden Einrichtung (etwa eines Fahrzeugs) dient.

Figur 13b zeigt eine Seitenansicht der in Figur 13a gezeigten Darstellung. Das Bezugszeichen 56 kennzeichnet eine Steuerungseinrichtung, welche die Primärspule in Abhängigkeit von einem von der Erfassungseinrichtung 20 ausgegebenen Signal steuert. Falls beispielsweise die Auswerteeinrichtung 30 ein Signal ausgibt, welche auf einen Fremdkörper zwischen der Primärspule 12 und dem Objekt hinweist, kann die Steuerungseinrichtung eine Abschaltung der Primärspule bewirken.

Die Erfassungseinrichtung 20 bzw. der Sensorprint weist hier die zu vermessenden Netzwerke auf und ist eine flache Ausführung von mehreren nebeneinanderliegenden Spulen, wie in den oben genannten Figuren gezeigt. Diese Sensoreinrichtung 40 befindet sich oberflächennah im Bodenmodul und bevorzugt direkt gegenüber der Primärspule. Die zugehörige Messelektronik kann auch in diesem Print untergebracht werden oder aber eine separate Printeinheit darstellen, die bevorzugt mittels eines Kabels auch den Sensorprint kontaktiert. So ist die Sensoreinrichtung in der Lage, die Oberfläche des Bodenmoduls (oder auch den Zwischenraum zwischen Primärmodul und Sekundärmodul) nach Objekten zu überwachen.

Wie oben dargestellt, ist es möglich, einzelne Elemente der Schaltkreise veränderbar zu wählen (z.B. mittels Trimmkondensatoren oder Kapazitätsdioden oder auch Potentiometern). Auf diese Weise eröffnen sich für weitere Anwendungen Möglichkeiten. So könnte beispielsweise eine Justierung unter verschiedenen Umweltbedingungen, beispielsweise eine Temperaturkompensation, erfolgen. Daneben könnte auch die Empfindlichkeit aufrechterhalten werden und es könnten Störobjekte diskriminiert werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

**Bezugszeichenliste**

| | |
|---|---|
| 1 | Ladeanordnung |
| 10 | Sensor-Zweipol |
| 12 | Primärspule |
| 14 | Gehäuse |
| 20 | Erfassungseinrichtung, Fremdkörpererkennungseinrichtung |
| 30 | Auswerteeinrichtung; Auswerteelektronik |
| 31 | Signalgenerator, Signalerzeugung |
| 32 | Signaltrennung |
| 33 | Signalverteilung |
| 34 | Signalmessung |
| 35 | (digitale) Signalverarbeitung |
| 36 | Steuerungseinheit |
| 37 | Sensorschnittstelle |
| 38 | analoge Verarbeitung |
| 39 | Referenzebene Mess |
| 40 | Sensoreinrichtung, induktive Sensoreinheit |
| 41 | (planare, gedruckte) Induktivitäten |
| 42 | Resonanzanpassungen |
| 43 | Einzelsensoreinrichtung, Einzelsensor, Sensorfeld |
| 43_1, 43_2, 43_N | Sensorfeld |
| 45 | Referenzebene DUT |
| 50 | (übergeordnete Steuereinheit), Steuerungseinrichtung |
| 60 | Umgebung, überwachter Raum |
| 70 | erste Kalibriereinrichtung, Kalibriereinheit A/B/C |
| 70_A | Kalibriereinheit A |
| 70_B | Kalibriereinheit B |
| 70_C | Kalibriereinheit C |
| 72 | Kalibrierelement A/B/C |
| 72_A | Kalibrierelement A |
| 72_B | Kalibrierelement B |
| 72_C | Kalibrierelement C |
| 74 | zweite Kalibriereinrichtung |
| 76 | Kalibrierelement |
| 76_A | Kalibrierelement A |
| 76_B | Kalibrierelement B |
| 76_C | Kalibrierelement C |
| 100 | Ladeanordnung |
| 120 | Sekundärspule |
| E1, E2 | Ellipse |
| L1, L2 | kreisförmige Linien |

**Patentansprüche**

1. Verfahren zum Erfassen von Objekten bei Ladeanordnungen (1) zum Laden von elektrisch betriebenen Einrichtungen (100) mittels einer Erfassungseinrichtung (20), wobei wenigstens eine Einzelsensoreinrichtung (43) aufweisend einen elektrischen Schaltkreis, der wenigstens eine Erfassungsspule und/oder wenigstens einen Widerstand und/oder wenigstens einen Kondensator aufweist, mit einer Wechselspannung beaufschlagt wird und wenigstens eine für die Einzelsensoreinrichtung (43) charakteristische elektrische Größe $\left(a_n^M, b_n^M\right)$ gemessen wird, wobei wenigstens ein Kalibrierelement (72, 76) mit Wechselspannung beaufschlagt wird und wenigstens eine für dieses Kalibrierelement (72, 76) charakteristische elektrische Größe $\left(a_{Ref}^M, b_{Ref}^M; a_{G,Sn,Kal}^M, b_{G,Sn,Kal}^M\right)$ gemessen wird, wobei in Abhängigkeit von dieser für die Einzelsensoreinrichtung (43) charakteristischen Größe $\left(a_n^M, b_n^M\right)$ festgestellt wird, ob in der Umgebung (60) der Einzelsensoreinrichtung (43) ein gegenüber dieser Einzelsensoreinrichtung (43) bewegliches Objekt befindlich ist, wobei bei dieser Feststellung wenigstens eine Kalibriergröße berücksichtigt wird, die von wenigstens der für das Kalibrierelement (72, 76) charakteristischen elektrischen Größe $\left(a_{Ref}^M, b_{Ref}^M; a_{G,Sn,Kal}^M, b_{G,Sn,Kal}^M\right)$ abhängig ist.

2. Verfahren nach Anspruch 1,
   **dadurch gekennzeichnet, dass**
   wenigstens drei, insbesondere sich paarweise wenigstens in einer elektrischen Eigenschaft voneinander unterscheidende, Kalibrierelemente (72, 76) mit Wechselspannung beaufschlagt werden und jeweils eine für das jeweilige Kalibrierelement (72, 76) charakteristische elektrische Größe $\left(a_{Ref}^M, b_{Ref}^M; a_{G,Sn,Kal}^M, b_{G,Sn,Kal}^M\right)$ gemessen wird, wobei die Kalibriergröße von wenigstens diesen dreien, charakteristischen elektrischen Größen $\left(a_{Ref}^M, b_{Ref}^M; a_{G,Sn,Kal}^M, b_{G,Sn,Kal}^M\right)$ abhängig ist.

3. Verfahren nach wenigstens einem der vorangegangenen Ansprüche,
   **dadurch gekennzeichnet, dass**
   mittels einer ersten Kalibriereinrichtung (70) eine erste Kalibrierung wenigstens eines Messverfahrens der Erfassungseinrichtung vorgenommen wird und, insbesondere zeitlich verzögert, mittels einer zweiten Kalibriereinrichtung (74) eine weitere Kalibrierung des Messverfahrens vorgenommen wird.

4. Verfahren nach dem vorangegangenen Anspruch,
   **dadurch gekennzeichnet, dass**
   die mittels der zweiten Kalibriereinrichtung (74) vorgenommene weitere Kalibrierung unter Berücksichtigung der Ergebnisse der ersten Kalibrierung durch die erste Kalibriereinrichtung (70) erfolgt.

5. Verfahren nach wenigstens einem der beiden vorangegangenen Ansprüche,
   **dadurch gekennzeichnet, dass**
   die mittels der zweiten Kalibriereinrichtung (74) vorgenommene weitere Kalibrierung ohne Verwendung der ersten Kalibriereinrichtung (70) erfolgt.

6. Verfahren nach wenigstens einem der beiden vorangegangenen Ansprüche,
   **dadurch gekennzeichnet, dass**
   die mittels der zweiten Kalibriereinrichtung (74) vorgenommene weitere Kalibrierung basierend auf wenigstens einem und bevorzugt drei permanent an der Erfassungseinrichtung (20) angeordneten und insbesondere mit wenigstens einem Bauelement der Erfassungseinrichtung (20) elektrisch verbundenen Kalibrierelementen (76) erfolgt.

7. Verfahren nach wenigstens einem der beiden vorangegangenen Ansprüche,
   **dadurch gekennzeichnet, dass**
   die erste Kalibriereinrichtung (70) zur Vornahme der ersten Kalibrierung lösbar mit der Erfassungseinrichtung (20), insbesondere an eine Sensorschnittstelle (37) zur elektrischen Verbindung der Einzelsensoreinrichtung (43) und/oder einer Sensoreinrichtung (40) mit einem Signalgenerator (31), verbunden wird.

8. Verfahren nach wenigstens einem der beiden vorangegangenen Ansprüche,
**dadurch gekennzeichnet, dass**
mittels der zweiten Kalibriereinrichtung (74) mindestens zwei und bevorzugt eine Vielzahl weiterer Kalibrierungen, bevorzugt jeweils nach Vornahme mindestens einer Messung einer für die Einzelsensoreinrichtung (43) charakteristischen elektrischen Größe, vorgenommen werden.

9. Ladeanordnung (1) zum Laden von elektrische betriebenen Einrichtungen (100) mit einer Primärspule (12), welche dazu geeignet und bestimmt ist, ein magnetisches Feld zu erzeugen, um elektrische Energie induktiv auf eine Sekundärspule (120), welche Bestandteil der elektrisch betriebenen Einrichtung (100) ist, zu übertragen, wobei die Ladeanordnung (1) eine Erfassungseinrichtung (20) zum Erfassen von Objekten aufweist, wobei die Erfassungseinrichtung (20) wenigstens einen Signalgenerator (31), welcher dazu geeignet und bestimmt ist, wenigstens eine Einzelsensoreinrichtung (43) aufweisend einen elektrischen Schaltkreis, der wenigstens eine Erfassungsspule und/oder wenigstens einen Widerstand und/oder wenigstens einen Kondensator aufweist, mit Wechselspannung zu versorgen, und eine Auswerteeinrichtung (30) aufweist, die dazu geeignet und bestimmt ist, wenigstens eine für die Einzelsensoreinrichtung (43) charakteristische elektrische Größe $(a_n^M, b_n^M)$ zu erfassen,
**dadurch gekennzeichnet, dass**
die Erfassungseinrichtung (20) dazu geeignet und bestimmt ist, wenigstens eine Kalibriereinrichtung (70, 74) mit wenigstens einem Kalibrierelement (72, 76) insbesondere durch den Signalgenerator (31) mit Wechselspannung zu versorgen, wobei die Auswerteeinrichtung (30) dazu geeignet und bestimmt ist, wenigstens eine für das Kalibrierelement (72, 76) charakteristische elektrische Größe zu erfassen.

10. Ladeanordnung (1) nach dem vorangegangenen Anspruch,
**dadurch gekennzeichnet, dass**
die Primärspule (12) mit einer Primärspannung der Frequenz (f1) betrieben wird und die Wechselspannungsquelle eine Wechselspannung der Frequenz (f2) abgibt und eine dieser beiden Frequenzen wenigstens doppelt so groß ist wie die andere der beiden Frequenzen (f1, f2).

11. Ladeanordnung (1) nach wenigstens einem der beiden vorangegangenen Ansprüche,
**dadurch gekennzeichnet, dass**
die Ladeanordnung (1) eine Steuerungseinrichtung aufweist, welche eine Bestromung der Primärspule (12) in Abhängigkeit von einem Ausgangssignal der Erfassungseinrichtung (20) steuert.

12. Erfassungseinrichtung (20) zum Erfassen von Objekten, wobei die Erfassungseinrichtung (20) wenigstens einen Signalgenerator (31), welcher dazu geeignet und bestimmt ist, wenigstens eine Einzelsensoreinrichtung (43) aufweisend einen elektrischen Schaltkreis, der wenigstens eine Erfassungsspule und/oder wenigstens einen Widerstand und/oder wenigstens einen Kondensator aufweist, mit Wechselspannung zu versorgen, und eine Auswerteeinrichtung (30) aufweist, die dazu geeignet und bestimmt ist, wenigstens eine für die Einzelsensoreinrichtung (43) charakteristische elektrische Größe $(a_n^M, b_n^M)$ zu erfassen,
**dadurch gekennzeichnet, dass**
die Erfassungseinrichtung (20) dazu geeignet und bestimmt ist, wenigstens eine Kalibriereinrichtung (70, 74) mit wenigstens einem Kalibrierelement (72, 76) insbesondere durch den Signalgenerator (31) mit Wechselspannung zu versorgen, wobei die Auswerteeinrichtung (30) dazu geeignet und bestimmt ist, wenigstens eine für das Kalibrierelement (72, 76) charakteristische elektrische Größe zu erfassen.

13. Erfassungseinrichtung (20) nach dem vorangegangenen Anspruch,
**dadurch gekennzeichnet, dass**
es sich bei der Kalibriereinrichtung (70) um eine mit der Erfassungseinrichtung (43) lösbar verbindbare Kalibriereinrichtung (70) handelt oder die Erfassungseinrichtung (20) eine permanent mit ihr verbundene Kalibriereinrichtung (74) aufweist.

14. Erfassungseinrichtung (20) nach wenigstens einem der vorangegangenen Ansprüche 12-13,
**dadurch gekennzeichnet, dass**
die Kalibriereinrichtung (70, 72) wenigstens drei Kalibrierelemente (72; 76), die sich bevorzugt in ihren elektrischen Eigenschaften jeweils paarweise voneinander unterscheiden, aufweist.

15. Erfassungseinrichtung (20) nach wenigstens einem der vorangegangenen Ansprüche 12-14,

**dadurch gekennzeichnet, dass**

die Auswerteeinrichtung dazu geeignet und bestimmt ist, in Abhängigkeit von einer für die Einzelsensoreinrichtung (43) charakteristischen elektrischen Größe $(a_n^M, b_n^M)$ festzustellen, ob in der Umgebung (60) der Einzelsensoreinrichtung (43) ein gegenüber dieser Einzelsensoreinrichtung (43) bewegliches Objekt befindlich ist, wobei bei dieser Feststellung wenigstens eine Kalibriergröße berücksichtigt wird, die von wenigstens einer für das Kalibrierelement (70, 72) charakteristischen elektrischen Größe $(a_{Ref}^M, b_{Ref}^M; \quad a_{G,Sn,Kal}^M, b_{G,Sn,Kal}^M)$ abhängig ist.

$$a_1(\omega_i) \longrightarrow$$

$$b_1(\omega_i) \longleftarrow$$

10

## Fig. 1

50    20    30    40    60

## Fig. 2

30

36    35    34

$a$    $b$

DAC

ADC

ADC

31    32    33

37

## Fig. 3

Fig. 4

Fig. 5

Fig. 6

Fig. 7

Fig. 8

Fig. 9

Fig. 10

Fig. 11

Fig. 12

## Fig. 13a

## Fig. 13b

## Fig. 13c

## Fig. 13d

**Europäisches Patentamt**
**European Patent Office**
**Office européen des brevets**

# EUROPÄISCHER RECHERCHENBERICHT

**Nummer der Anmeldung**

EP 19 16 9790

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/187519 A1 (WIDMER HANS PETER [CH] ET AL) 30. Juni 2016 (2016-06-30) | 1,2,7,9, 10,12-15 | INV. B60L53/124 |
| Y | * Absatz [0039] * <br> * Absatz [0058] * <br> * Absatz [0071] - Absatz [0076] * <br> * Absatz [0084] - Absatz [0097] * <br> * Absatz [0122] * <br> * Abbildungen 2, 4, 11, 12 * <br> ----- | 3-6,8,11 | |
| Y | US 2017/141622 A1 (MEICHLE DAVID PAUL [US]) 18. Mai 2017 (2017-05-18) <br> * Absatz [0114] * <br> * Absatz [0153] * <br> * Abbildung 4 * <br> * Gleichungen (3), (14) * <br> ----- | 3,4 | |
| Y | US 2015/323694 A1 (ROY ARUNANSHU MOHAN [US] ET AL) 12. November 2015 (2015-11-12) <br> * Absatz [0036] * <br> * Absatz [0301] - Absatz [0302] * <br> ----- | 5,6,8,11 | |

**RECHERCHIERTE SACHGEBIETE (IPC)**

B60L

Der vorliegende Recherchenbericht wurde für alle Patentansprüche erstellt

| Recherchenort | Abschlußdatum der Recherche | Prüfer |
|---|---|---|
| Den Haag | 3. September 2019 | Lutz, Tobias |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
     Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 16 9790

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2019

| Im Recherchenbericht angeführtes Patentdokument | Datum der Veröffentlichung | Mitglied(er) der Patentfamilie | Datum der Veröffentlichung |
|---|---|---|---|
| US 2016187519 A1 | 30-06-2016 | CN 107107766 A<br>EP 3216104 A1<br>JP 2018504876 A<br>US 2016187519 A1<br>WO 2016109114 A1 | 29-08-2017<br>13-09-2017<br>15-02-2018<br>30-06-2016<br>07-07-2016 |
| US 2017141622 A1 | 18-05-2017 | US 2017141622 A1<br>US 2018366994 A1<br>WO 2017070227 A1 | 18-05-2017<br>20-12-2018<br>27-04-2017 |
| US 2015323694 A1 | 12-11-2015 | CN 106489082 A<br>EP 3140680 A1<br>JP 2017518018 A<br>US 2015323694 A1<br>US 2018329101 A1<br>WO 2015171910 A1 | 08-03-2017<br>15-03-2017<br>29-06-2017<br>12-11-2015<br>15-11-2018<br>12-11-2015 |

EPO FORM P0461

Für nähere Einzelheiten zu diesem Anhang : siehe Amtsblatt des Europäischen Patentamts, Nr.12/82